(19) Europäisches Patentamt
European Patent Office
Office européen des brevets

(11) **EP 3 466 079 B1**

(12) **EUROPEAN PATENT SPECIFICATION**

(45) Date of publication and mention
of the grant of the patent:
**12.07.2023  Bulletin 2023/28**

(21) Application number: **17802259.6**

(22) Date of filing: **17.05.2017**

(51) International Patent Classification (IPC):
$H04L\ 65/80^{(2022.01)}$     $H04L\ 65/612^{(2022.01)}$
$H04L\ 65/613^{(2022.01)}$     $H04L\ 65/65^{(2022.01)}$
$H04L\ 65/70^{(2022.01)}$     $H04L\ 67/02^{(2022.01)}$
$H04N\ 21/234^{(2011.01)}$     $H04N\ 21/262^{(2011.01)}$
$H04N\ 21/81^{(2011.01)}$     $H04N\ 21/845^{(2011.01)}$
$H04N\ 21/2343^{(2011.01)}$

(52) Cooperative Patent Classification (CPC):
**H04L 65/80; H04L 65/612; H04L 65/613;
H04L 65/65; H04L 65/70; H04L 67/02;
H04N 21/23418; H04N 21/23439; H04N 21/26258;
H04N 21/816; H04N 21/8456;** H04N 19/597

(86) International application number:
**PCT/FI2017/050376**

(87) International publication number:
**WO 2017/203098 (30.11.2017 Gazette 2017/48)**

(54) **METHOD AND AN APPARATUS AND A COMPUTER PROGRAM FOR ENCODING MEDIA CONTENT**

VERFAHREN UND VORRICHTUNG SOWIE COMPUTERPROGRAMM ZUR CODIERUNG VON MEDIENINHALTEN

PROCÉDÉ, APPAREIL ET PROGRAMME D'ORDINATEUR POUR CODER UN CONTENU MULTIMÉDIA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2016  US 201662340707 P**

(43) Date of publication of application:
**10.04.2019  Bulletin 2019/15**

(73) Proprietor: **Nokia Technologies Oy
02610 Espoo (FI)**

(72) Inventor: **HANNUKSELA, Miska
33610 Tampere (FI)**

(74) Representative: **Berggren Oy
P.O. Box 16
Eteläinen Rautatiekatu 10A
00101 Helsinki (FI)**

(56) References cited:
EP-A1- 2 824 885          EP-A1- 2 824 885
WO-A1-2015/014773      WO-A1-2015/197815
US-A1- 2013 188 922     US-A1- 2015 237 166

• LUCIA D'ACUNTO ET AL: "Using MPEG DASH SRD for zoomable and navigable video", PROCEEDINGS OF THE 7TH INTERNATIONAL CONFERENCE ON MULTIMEDIA SYSTEMS, MMSYS '16, 1 January 2016 (2016-01-01), pages 1-4, XP055444646, New York, New York, USA DOI: 10.1145/2910017.2910634 ISBN: 978-1-4503-4297-1
• D'ACUNTO, L. ET AL.: 'Using MPEG DASH SRD for zoomable and navigable video' PROCEEDINGS OF INT. CONF. ON MULTIMEDIA SYSTEMS, [Online] 10 May 2016, page 4, XP055444646 Retrieved from the Internet: <URL:http://dl.acm.org/citation .cfm?id=291 0634> [retrieved on 2017-09-15]

- **MARTENS, G.: 'Bandwidth management for ODV tiled streaming with MPEG-DASH' UNIVERSITEIT HASSELT MASTER'S THESIS, [Online] 2015, XP055445280 Retrieved from the Internet: <URL:https://uhdspace.uhasselt.be/dspace/handle/1942/19390> [retrieved on 2017-09-12]**

**Description**

Technical Field

The present solution generally relates to encoding media content. In particular, the solution relates to a viewport-adaptive streaming.

Background

In conventional streaming arrangement for 360-degree video, the full 360-degree video is transmitted. For example, an entire equirectangular panorama is transmitted.

However, in many displaying environments, only a partial picture is needed to be displayed while the remaining picture is required to be decoded but is not displayed. These displaying situations include e.g. a typical head-mounted displays (HMDs) with approximately 100 degrees field of view, while often the input video for HMD consumption covers entire 360 degree. Typical flat-panel viewing environments display up to 40-degree-field-of-view. When displaying wide-FOV-content (e.g. fisheye) on such a display, it may be preferred to display a spatial subset rather than the entire picture.

Conventionally, coded pictures need to be fully decoded, since they have strong spatial dependencies (e.g. intra prediction), entropy coding dependencies, in-loop filtering dependencies, and spatio-temporal dependencies (motion vectors pointing to a different part of the picture). A motion-constrained tile set enables decoding of the tile set independently of other tile sets; however, as the coded tile set may be interleaved with other coded data in the bitstream and as a parameter sets and headers (e.g. slice segment header) are for the entire bitstream, a dedicated decoding process is needed for decoding particular motion-constrained tile set, while omitting the decoding of other tiles.

A recent trend in order to reduce the streaming bitrate of VR video is the following; a subset of the 360-degree video content covering the current view orientation is transmitted at the best quality/resolution, while the remaining of 360-degree video is transmitted at a lower quality/resolution.

Publication WO 2015/197815 discloses a solution for determining a region-of-interest (ROI) for a client device on the basis of a HEVC-tiled video stream. In the solution a ROI video stream is received for rendering. A first ROI defines a first sub-region within said full image region of said HEVC-tiled video stream, and the positions of HEVC tiles in said HEVC-tiled video stream are being defined by tile position information. ROI position information associated with at least one video frame of said ROI video stream is provided, wherein said ROI position information comprises at least a first position of said first ROI. One or more HEVC tiles that overlap with said first ROI are identified on the basis of said ROI position information and said tile position information. A client device requests video data, preferably as HEVC tile streams, associated with said one or more identified HEVC tiles for rendering a second ROI, wherein the second ROI defines a second sub-region within the full image region of said HEVC-tiled video stream.

Publication EP 2 824 885 discloses a manifest file format supporting panoramic video.

A client device selects a video segment from a content delivery network. At first, a super manifest file is retrieved from the content delivery network. The super manifest file defines video files and comprises tile information. Secondly, a video tile and corresponding manifest file is selected from the super manifest based on the tile information. Then, the manifest file is retrieved from the content delivery network. Finally, a video segment is selected, retrieved and played on the client device .

A publication by Lucia D'Acunto et al. "Using MPEG DASH SRD for zoomable and navigable video" on Proceedings of the 7th International Conference on Multimedia systems (1 January, 2016) discloses a video streaming client implementation that makes use of the Spatial Relationship Description (SRD) feature of the MPEG-DASH standard to provide a zoomable and navigable video to an end user. The publication lists design choices enabling the player to render DASH content supporting the SRD feature.

US 2013/188922 discloses a method that comprises recording, by a device, a first set of samples of at least one of video data or audio data and recording, by the device, a second set of samples of information related to at least one of a position of the device or an orientation of the device. A plurality of samples in the first set are associated with a plurality of samples in the second set.

Now, in order to enable automated selection of a representation that best suits the current viewing direction (e.g., head orientation when viewing is performed with a head-mounted display), the streaming manifest should include appropriate signaling.

Summary

The invention is defined by the independent claims. Further embodiments of the invention are defined by the dependent claims.

Description of the Drawings

In the following, various embodiments of the invention will be described in more detail with reference to the appended drawings, in which

Fig. 1     shows an apparatus according to an embodiment as a simplified block chart;
Fig. 2     shows a layout of an apparatus according to an embodiment;
Fig. 3     shows a configuration of a system according to an embodiment;
Fig. 4     shows a block diagram of a video encoder according to an embodiment;
Fig. 5     shows an example of a relation of Yaw and Pitch to a coordinate system;
Fig. 6     shows an example of one possible selection of a viewport and one possible definition or Yaw and Pitch angles for the viewport;
Fig. 7     shows an example of a viewport;
Fig. 8     shows another example of a viewport;
Fig. 9     is a flowchart illustrating a method according to an embodiment; and
Fig. 10    is a flowchart illustrating a method according to another embodiment.

Description of Example Embodiments

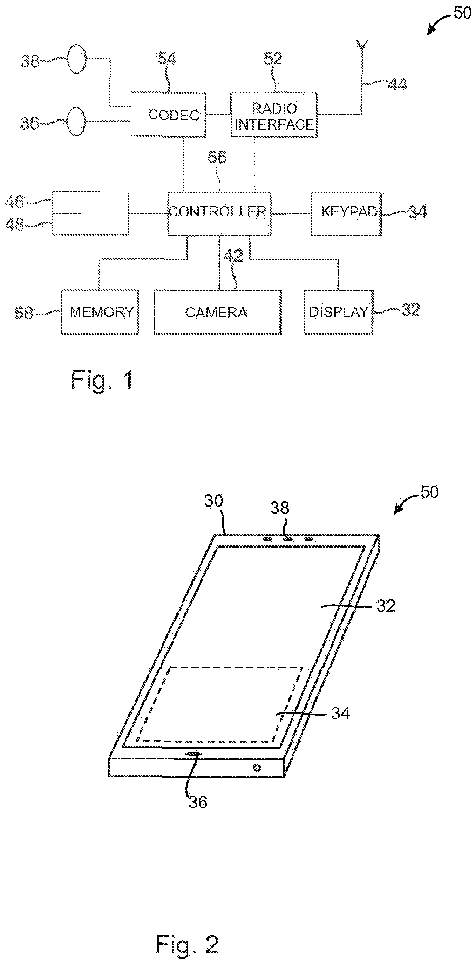

The following describes in further detail suitable apparatus and possible mechanisms for video encoding/decoding and providing encoded video for streaming and/or receiving streamed encoded video. In this regard reference is first made to Figures 1 and 2, where Figure 1 shows a block diagram of a video coding system according to an example embodiment as a schematic block diagram of an exemplary apparatus or electronic device 50, which may incorporate a codec according to an embodiment of the invention. Figure 2 shows a layout of an apparatus according to an example embodiment. The elements of Figs. 1 and 2 will be explained next.

The electronic device 50 may for example be a mobile terminal, a user equipment of a wireless communication system, a smartphone, a camera device, a computer, or a head-mounted display device. However, it would be appreciated that embodiments of the invention may be implemented within any electronic device or apparatus which may require encoding and decoding or encoding or decoding video images. It is appreciated that video encoding may be performed with an electronic device that is different and of different type than the electronic device performing video decoding. It is also appreciated that components of the apparatus may differ, e.g. the apparatus for video encoding may comprise a camera but might not comprise a display, and the apparatus for video decoding may comprise a display but might not comprise a camera.

The apparatus 50 may comprise a housing 30 for incorporating and protecting the device. The apparatus 50 further may comprise a display 32 e.g. in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The apparatus may further comprise a camera 42 capable of recording or capturing images and/or video. In some embodiments, the apparatus 50 may comprise more than one camera, or one camera sensor may be integrated with an optics enabling the capture of more than one view with the camera sensor. The apparatus 50 may further comprise an infrared port for short range line of sight communication to other devices. In other embodiments the apparatus 50 may further comprise any suitable short range communication solution such as for example a Bluetooth wireless connection or a USB (Universal Serial Bus)/firewire wired connection.

The apparatus 50 may comprise a controller 56 or processor for controlling the apparatus 50. The controller 56 may be connected to memory 58 which in embodiments of the invention may store both data in the form of image and audio data and/or may also store instructions for implementation on the controller 56. The controller 56 may further be connected to codec circuitry 54 suitable for carrying out coding and decoding of audio and/or video data or assisting in coding and decoding carried out by the controller.

The apparatus 50 may further comprise a card reader 48 and a smart card 46, for example a UICC (Universal Integrated Circuit Card) and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

The apparatus 50 may comprise a camera capable of recording or detecting individual frames which are then passed to the codec 54 or the controller for processing. The apparatus may receive the video image data for processing from another device prior to transmission and/or storage. The apparatus 50 may also receive either wirelessly or by a wired connection the image for coding/decoding.

The apparatus 50 may be capable of capturing with the one or more cameras 42 and/or the optics integrated with the one or more cameras images and/or video having a wide field of view, such as a 360-degree panoramic field of view. 360-degree panoramic video content can be acquired by various means, including but not limited to: i) stitching pictures of more than one camera sensor to a single 360-degree panoramic image; and ii) a single image sensor with an optical arrangement, such as a catadioptric system. Stitching may be defined as combining two or more pictures of different camera sensors to form another picture that has a broader field-of-view than any of the two or more pictures alone and/or a different view direction or orientation than any of the two or more picture alone. The more than one camera sensors may be integrated with wide field-of-view lenses, such fisheye lenses. In some cases, the stitching may take place prior to encoding, i.e. a panoramic image or video is encoded, while in other cases the camera views may be encoded and decoded, and stitching or alike may take place after decoding, e.g. when connected with displaying on a head-mounted display. Fisheye lenses are covering very high filed-of-view (usually more than 180-degree). A catadioptric system may consist of a conventional lens and a mirror. The mirror could have different convex shapes e.g. parabolic, planar or spherical. The lens captures the light rays reflected through the mirror which provides an image with a broad field-of-view.

The apparatus 50 may be a head-mounted display, or display of the apparatus may be used as a part of the displaying arrangement for a head-mounted display (e.g. a smartphone apparatus 50 may be attached to a head-mounted optical arrangement that uses the smartphone display as the source), or the apparatus may be operationally connected to a head-mounted display (e.g. a computer apparatus 50 may output the decoded and potentially post-processed pictures to a head-mounted display connected to the computer apparatus). A head-mounted display may be based on displaying a side-by-side two-view picture or video in front of the user's eyes. A head-mounted display may be capable of sensing user's head orientation, e.g. through a motion sensor and/or an orientation sensor. A head-mounted display may be capable of showing a relatively wide field-of-view for each eye, such as about 90 degrees. When displaying wide field-of-view (FOV) or panoramic picture or video on the head-mounted display, the head orientation tracking may be used by the apparatus 50 and/or the head-mounted display to select the part of the decoded wide-FOV or panoramic picture or video to be displayed picture or video that matches the head orientation.

In some cases, the display may be capable of providing a three-dimensional (3D) experience through the use of polarizing or shutter glasses, causing a different picture to be displayed for the left eye than for the right eye. In some cases, the display may be a two-view auto-stereoscopic display, which can be used particularly in small, handheld devices. While these types of displays are capable of displaying stereoscopic content, a more immersive experience can be provided if a user can select their viewing position. The apparatus 50, such as a smartphone, a computer, a television set or a flat-panel display, may additionally comprise or be operationally connected with user tracking, head tracking, and/or gaze tracking means. The user, head, and/or gaze tracking means may be used to interactively select the view or views being displayed or the part of the wide-FOV or panoramic picture or video being displayed. Consequently, 3D immersion experience is improved. It should be understood that user, head, and/or gaze tracking means may be used additionally or alternatively with a conventional two-dimensional monoscopic display similarly to what is described above for stereoscopic displays.

A virtual reality (VR) projection (sometimes simply referred to as a projection) may be defined as two-dimensional representation of the omnidirectional visual data representing one observation point. An observation point may be defined as a point or volume in a three-dimensional space for virtual reality audio/video acquisition or playback. An observation point is usually the same as the center point of a device or rig used for virtual reality audio/video acquisition as well as the position of the observer's head in the three-dimensional space in which the audio and video tracks are located.

A specific projection for mapping a panoramic image covering 360-degree field-of-view horizontally and 180-degree field-of-view vertically (hence representing a sphere) to a rectangular two-dimensional image plane is known as equirectangular projection. In this case, the horizontal coordinate may be considered equivalent to a longitude, and the vertical coordinate may be considered equivalent to latitude, with no transformation or scaling applied. In some cases panoramic content with 360-degree horizontal field-of-view but with less than 180-degree vertical field-of-view may be considered special cases of equirectangular projection, where the polar areas of the sphere have not been mapped onto the two-dimensional image plane. The equirectangular projection preserves the straightness of the vertical lines but distorts the nadir and zenith areas.

A family of pseudo-cylindrical projections attempts to minimize the distortion of the polar regions of the cylindrical projections, such as the equirectangular projection, by bending the meridians toward the center of the map as a function of longitude while maintaining the cylindrical characteristic of parallel parallels. Pseudo-cylindrical projections result into non-rectangular contiguous 2D images representing the projected sphere. However, it is possible to present pseudo-cylindrical projections in interrupted forms that are made by joining several regions with appropriate central meridians and false easting and clipping boundaries. Pseudo-cylindrical projections may be categorized based upon the shape of the meridians to sinusoidal, elliptical, parabolic, hyperbolic, rectilinear and miscellaneous pseudo-cylindrical projections. An additional characterization is based upon whether the meridians come to a point at the pole or are terminated along a straight line (in which case the projection represents less than 180 degrees vertically).

In cubemap projection format (a.k.a. cube map), spherical video is projected onto the six faces (a.k.a. sides) of a cube. The cubemap may be generated e.g. by first rendering the spherical scene six times from a viewpoint, with the views defined by an 90 degree view frustum representing each cube face. The cube sides may be frame-packed into the same frame or each cube side may be treated individually (e.g. in encoding). There are many possible orders of locating cube sides onto a frame and/or cube sides may be rotated or mirrored. The frame width and height for frame-packing may be selected to fit the cube sides "tightly" e.g. at 3x2 cube side grid, or may include unused constituent frames e.g. at 4x3 cube side grid.

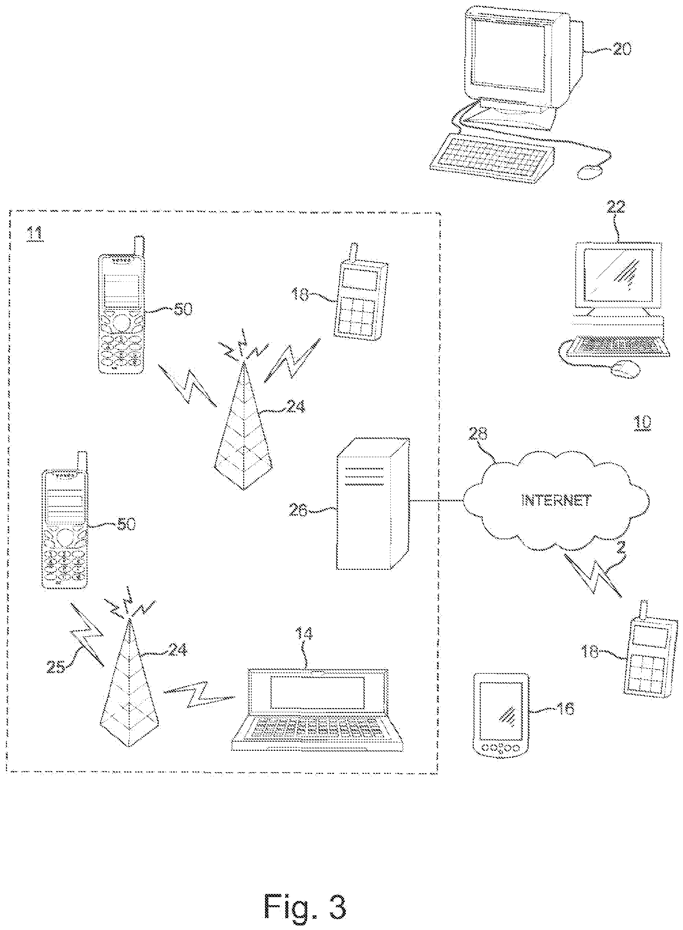

With respect to Figure 3, an example of a system within which embodiments of the present invention can be utilized is shown. The system 10 comprises multiple communication devices which can communicate through one or more networks. The system 10 may comprise any combination of wired or wireless networks including, but not limited to a wireless cellular telephone network (such as a GSM (global systems for mobile communications), UMTS (universal mobile telecommunications system), CDMA (code division multiple access) network etc.), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices and/or apparatus 50 suitable for implementing embodiments of the invention.

For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

The embodiments may also be implemented in a set-top box; i.e. a digital TV receiver, which may/may not have a display or wireless capabilities, in tablets or (laptop) personal computers (PC), which have hardware or software or combination of the encoder/decoder implementations, in various operating systems, and in chipsets, processors, DSPs (Digital Signal Processor) and/or embedded systems offering hardware/software based coding.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio, infrared, laser, cable connections, and any suitable connection.

In telecommunications and data networks, a channel may refer either to a physical channel or to a logical channel. A physical channel may refer to a physical transmission medium such as a wire, whereas a logical channel may refer to a logical connection over a multiplexed medium, capable of conveying several logical channels. A channel may be used for conveying an information signal, for example a bitstream, from one or several senders (or transmitters) to one or several receivers.

Real-time Transport Protocol (RTP) is widely used for real-time transport of timed media such as audio and video. RTP may operate on top of the User Datagram Protocol (UDP), which in turn may operate on top of the Internet Protocol (IP). RTP is specified in Internet Engineering Task Force (IETF) Request for Comments (RFC) 3550, available from www.ietf.org/rfc/rfc3550.txt. In RTP transport, media data is encapsulated into RTP packets. Typically, each media type or media coding format has a dedicated RTP payload format.

An RTP session is an association among a group of participants communicating with RTP. It is a group communications channel which can potentially carry a number of RTP streams. An RTP stream is a stream of RTP packets comprising media data. An RTP stream is identified by an SSRC belonging to a particular RTP session. SSRC refers to either a synchronization source or a synchronization source identifier that is the 32-bit SSRC field in the RTP packet header. A synchronization source is characterized in that all packets from the synchronization source form part of the same timing and sequence number space, so a receiver may group packets by synchronization source for playback. Examples of synchronization sources include the sender of a stream of packets derived from a signal source such as a microphone or a camera, or an RTP mixer. Each RTP stream is identified by a SSRC that is unique within the RTP session. An RTP stream may be regarded as a logical channel.

Available media file format standards include ISO base media file format (ISO/IEC 14496-12, which may be abbreviated ISOBMFF), MPEG-4 file format (ISO/IEC 14496-14, also known as the MP4 format), file format for NAL (Network Abstraction Layer) unit structured video (ISO/IEC 14496-15) and 3GPP file format (3GPP TS 26.244, also known as the 3GP format). The ISO base media file format is the base for derivation of all the above mentioned file formats (excluding the ISO base media file format itself).

Some concepts, structures, and specifications of ISOBMFF are described below as an example of a container file format, based on which the embodiments may be implemented. The aspects of the invention are not limited to ISOBMFF, but rather the description is given for one possible basis on top of which the invention may be partly or fully realized.

One building block in the ISOBMFF is called a box. Each box may have a header and a payload. The box header indicates the type of the box and the size of the box in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISOBMFF may be considered to specify a hierarchical structure of boxes. Each box of the ISO base media file may be identified by a four-character code (4CC, fourCC). A four-character code may interchangeably be represented by a 32-bit unsigned integer (by assuming a certain conversion of characters to 8-bit values, a certain bit endianness, and a certain byte endianness). The header may provide information about the type and size of the box.

According to the ISOBMFF, a file may include media data and metadata that may be enclosed in separate boxes. In an example embodiment, the media data may be provided in a media data (mdat) box and the movie (moov) box may be used to enclose the metadata. In some cases, for a file to be operable, both of the mdat and moov boxes must be present. The movie (moov) box may include one or more tracks, and each track may reside in one corresponding track (trak) box. Each track is associated with a handler, identified by a four-character code, specifying the track type. Video, audio, and image sequence tracks can be collectively called media tracks, and they contain an elementary media stream. Other track types comprise hint tracks and timed metadata tracks. Tracks comprise samples, such as audio or video frames. A media track refers to samples (which may also be referred to as media samples) formatted according to a media compression format (and its encapsulation to the ISOBMFF). A hint track refers to hint samples, containing cookbook instructions for constructing packets for transmission over an indicated communication protocol. The cookbook instructions may include guidance for packet header construction and may include packet payload construction. In the packet payload construction, data residing in other tracks or items may be referenced. As such, for example, data residing in other tracks or items may be indicated by a reference as to which piece of data in a particular track or item is instructed to be copied into a packet during the packet construction process. A timed metadata track may refer to samples describing referred media and/or hint samples. For the presentation of one media type, one media track may be selected.

The 'trak' box contains a Sample Table box. The Sample Table box comprises e.g. all the time and data indexing of the media samples in a track. The Sample Table box is required to contain a Sample Description box. The Sample Description box includes an entry count field, specifying the number of sample entries included in the box. The Sample Description box is required to contain at least one sample entry. The sample entry format depends on the handler type for the track. Sample entries give detailed information about the coding type used and any initialization information needed for that coding.

The movie fragment feature may enable splitting the metadata that otherwise might reside in the movie box into multiple pieces. Each piece may correspond to a certain period of time of a track. In other words, the movie fragment feature may enable interleaving file metadata and media data. Consequently, the size of the movie box may be limited and the use cases mentioned above be realized.

In some examples, the media samples for the movie fragments may reside in an mdat box. For the metadata of the movie fragments, however, a moof box may be provided. The moof box may include the information for a certain duration of playback time that would previously have been in the moov box. The moov box may still represent a valid movie on its own, but in addition, it may include an mvex box indicating that movie fragments will follow in the same file.

The movie fragments may extend the presentation that is associated to the moov box in time.

Within the movie fragment there may be a set of track fragments, including anywhere from zero to a plurality per track. The track fragments may in turn include anywhere from zero to a plurality of track runs, each of which document is a contiguous run of samples for that track (and hence are similar to chunks). Within these structures, many fields are optional and can be defaulted. The metadata that may be included in the moof box may be limited to a subset of the metadata that may be included in a moov box and may be coded differently in some cases. Details regarding the boxes that can be included in a moof box may be found from the ISOBMFF specification. A self-contained movie fragment may be defined to consist of a moof box and an mdat box that are consecutive in the file order and where the mdat box contains the samples of the movie fragment (for which the moof box provides the metadata) and does not contain samples of any other movie fragment (i.e. any other moof box).

A sample grouping in the ISOBMFF and its derivatives, such as the file format for NAL unit structured video (ISO/IEC 14496-15), may be defined as an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping may have a type field to indicate the type of grouping. Sample groupings may be represented by two linked data structures: (1) a SampleToGroup box (sbgp box) represents the assignment of samples to sample groups; and (2) a SampleGroupDescription box (sgpd box) contains a sample group entry for each sample group describing the properties of the group. There may be multiple instances of the SampleToGroup and SampleGroupDescription boxes based on different grouping criteria. These may be distinguished by a type field used to indicate the type of grouping. The 'sbgp' and the 'sgpd' boxes may be linked using the value of grouping_type and, in some versions of the boxes, also the value of grouping_type_parameter. The 'sbgp' box indicates the index of the sample group description entry that a particular sample belongs to.

The Matroska file format is capable of (but not limited to) storing any of video, audio, picture, or subtitle tracks in one file. Matroska file extensions include .mkv for video (with subtitles and audio), .mk3d for stereoscopic video, .mka for audio-only files, and .mks for subtitles only. Matroska may be used as a basis format for derived file formats, such as WebM.

Matroska uses Extensible Binary Meta Language (EBML) as basis. EBML specifies a binary and octet (byte) aligned format inspired by the principle of XML. EBML itself is a generalized description of the technique of binary markup. A Matroska file consists of Elements that make up an EBML "document." Elements incorporate an Element ID, a descriptor for the size of the element, and the binary data itself. Elements can be nested.

A Segment Element of Matroska is a container for other top-level (level 1) elements. A Matroska file may comprise (but is not limited to be composed of) one Segment. Multimedia data in Matroska files is organized in Clusters (or Cluster Elements), each containing typically a few seconds of multimedia data. A Cluster comprises BlockGroup elements, which in turn comprise Block Elements. A Cues Element comprises metadata which may assist in random access or seeking and may include file pointers or respective timestamps for seek points.

Video codec consists of an encoder that transforms the input video into a compressed representation suited for storage/transmission and a decoder that can decompress the compressed video representation back into a viewable form. A video encoder and/or a video decoder may also be separate from each other, i.e. need not form a codec. Typically an encoder discards some information in the original video sequence in order to represent the video in a more compact form (that is, "lossy" compression, resulting in a lower bitrate), although encoders and coding specifications may additionally or alternatively have lossless compression mode(s). A video encoder may be used to encode an image sequence, as defined subsequently, and a video decoder may be used to decode a coded image sequence. A video encoder or an intra coding part of a video encoder or an image encoder may be used to encode an image, and a video decoder or an inter decoding part of a video decoder or an image decoder may be used to decode a coded image.

Typical hybrid video encoders, for example many encoder implementations of ITU-T H.263 and H.264, encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, the encoder can control the balance between the accuracy of the pixel representation (picture quality) and size of the resulting coded video representation (file size or transmission bitrate).

Inter prediction, which may also be referred to as temporal prediction, motion compensation, or motion-compensated prediction, reduces temporal redundancy. In inter prediction the sources of prediction are previously decoded pictures. Intra prediction utilizes the fact that adjacent pixels within the same picture are likely to be correlated. Intra prediction can be performed in the spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

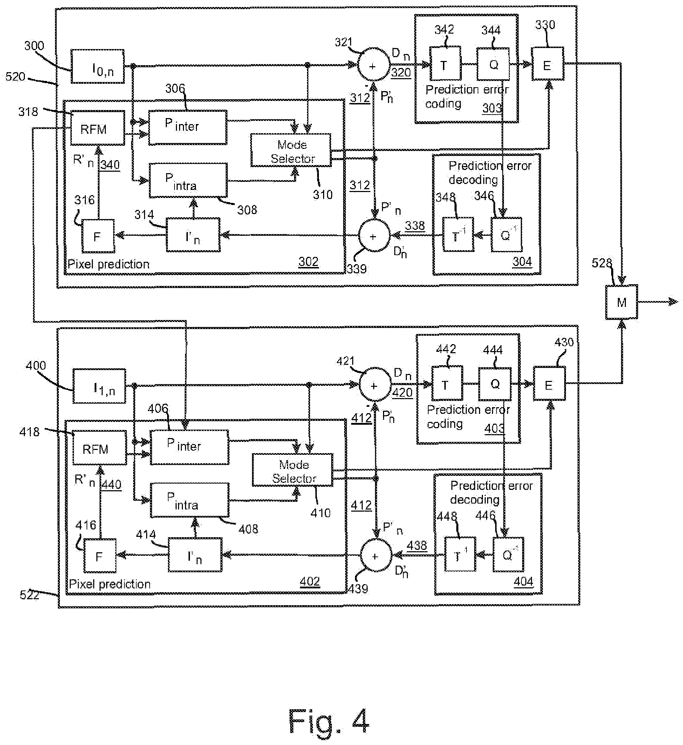

Figure 4 shows a block diagram of a video encoder suitable for employing embodiments of the invention. Figure 4 presents an encoder for two layers, but it would be appreciated that presented encoder could be similarly simplified to encode only one layer or extended to encode more than two layers. Figure 4 illustrates an embodiment of a video encoder comprising a first encoder section 520 for a base layer and a second encoder section 522 for an enhancement layer. Each of the first encoder section 520 and the second encoder section 522 may comprise similar elements for encoding incoming pictures. The encoder sections 520, 522 may comprise a pixel predictor 302, 402, prediction error encoder 303, 403 and prediction error decoder 304, 404. Figure 4 also shows an embodiment of the pixel predictor 302, 402 as comprising an inter-predictor 306, 406, an intra-predictor 308, 408, a mode selector 310, 410, a filter 316, 416, and a reference frame memory 318, 418.

The pixel predictor 302 of the first encoder section 500 receives 300 base layer images of a video stream to be encoded at both the inter-predictor 306 (which determines the difference between the image and a motion compensated reference frame 318) and the intra-predictor 308 (which determines a prediction for an image block based only on the already processed parts of current frame or picture). The output of both the inter-predictor and the intra-predictor are passed to the mode selector 310. The intra-predictor 308 may have more than one intra-prediction modes. Hence, each mode may perform the intra-prediction and provide the predicted signal to the mode selector 310. The mode selector 310 also receives a copy of the base layer picture 300. Correspondingly, the pixel predictor 402 of the second encoder section 522 receives 400 enhancement layer images of a video stream to be encoded at both the inter-predictor 406 (which determines the difference between the image and a motion compensated reference frame 418) and the intra-predictor 408 (which determines a prediction for an image block based only on the already processed parts of current frame or picture). The output of both the inter-predictor and the intra-predictor are passed to the mode selector 410. The intra-predictor 408 may have more than one intra-prediction modes. Hence, each mode may perform the intra-prediction and provide the predicted signal to the mode selector 410. The mode selector 410 also receives a copy of the enhancement layer picture 400.

Depending on which encoding mode is selected to encode the current block, the output of the inter-predictor 306, 406 or the output of one of the optional intra-predictor modes or the output of a surface encoder within the mode selector is passed to the output of the mode selector 310, 410. The output of the mode selector is passed to a first summing device 321, 421. The first summing device may subtract the output of the pixel predictor 302, 402 from the base layer picture 300/enhancement layer picture 400 to produce a first prediction error signal 320, 420 which is input to the prediction error encoder 303, 403.

The pixel predictor 302, 402 further receives from a preliminary reconstructor 339, 439 the combination of the prediction representation of the image block 312, 412 and the output 338, 438 of the prediction error decoder 304, 404. The preliminary reconstructed image 314, 414 may be passed to the intra-predictor 308, 408 and to a filter 316, 416. The filter 316, 416 receiving the preliminary representation may filter the preliminary representation and output a final reconstructed image 340, 440 which may be saved in a reference frame memory 318, 418. The reference frame memory 318 may be connected to the inter-predictor 306 to be used as the reference image against which a future base layer picture 300 is compared in inter-prediction operations. Subject to the base layer being selected and indicated to be source for inter-layer sample prediction and/or inter-layer motion information prediction of the enhancement layer according to some embodiments, the reference frame memory 318 may also be connected to the inter-predictor 406 to be used as the reference image against which a future enhancement layer pictures 400 is compared in inter-prediction operations. Moreover, the reference frame memory 418 may be connected to the inter-predictor 406 to be used as the reference image against which a future enhancement layer picture 400 is compared in inter-prediction operations.

Filtering parameters from the filter 316 of the first encoder section 550 may be provided to the second encoder section 522 subject to the base layer being selected and indicated to be source for predicting the filtering parameters of the enhancement layer according to some embodiments.

The prediction error encoder 303, 403 comprises a transform unit 342, 442 and a quantizer 344, 444. The transform unit 342, 442 transforms the first prediction error signal 320, 420 to a transform domain. The transform is, for example, the DCT transform. The quantizer 344, 444 quantizes the transform domain signal, e.g. the DCT coefficients, to form quantized coefficients.

The prediction error decoder 304, 404 receives the output from the prediction error encoder 303, 403 and performs the opposite processes of the prediction error encoder 303, 403 to produce a decoded prediction error signal 338, 438 which, when combined with the prediction representation of the image block 312, 412 at the second summing device 339, 439, produces the preliminary reconstructed image 314, 414. The prediction error decoder may be considered to comprise a dequantizer 361, 461, which dequantizes the quantized coefficient values, e.g. DCT coefficients, to reconstruct the transform signal and an inverse transformation unit 363, 463, which performs the inverse transformation to the reconstructed transform signal wherein the output of the inverse transformation unit 363, 463 contains reconstructed block(s). The prediction error decoder may also comprise a block filter which may filter the reconstructed block(s) according to further decoded information and filter parameters.

The entropy encoder 330, 430 receives the output of the prediction error encoder 303, 403 and may perform a suitable entropy encoding/variable length encoding on the signal to provide error detection and correction capability. The outputs of the entropy encoders 330, 430 may be inserted into a bitstream e.g. by a multiplexer 528.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Version 2 of H.265/HEVC included scalable, multiview, and fidelity range extensions, which may be abbreviated SHVC, MV-HEVC, and REXT, respectively. Version 2 of H.265/HEVC was published as ITU-T Recommendation H.265 (10/2014). There are currently ongoing standardization projects to develop further extensions to H.265/HEVC, including three-dimensional and screen content coding extensions, which may be abbreviated 3D-HEVC and SCC, respectively.

SHVC, MV-HEVC, and 3D-HEVC use a common basis specification, specified in Annex F of the version 2 of the HEVC standard. This common basis comprises for example high-level syntax and semantics e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

Some key definitions, bitstream and coding structures, and concepts of H.264/AVC and HEVC are described in this section as an example of a video encoder, decoder, encoding method, decoding method, and a bitstream structure, wherein the embodiments may be implemented. Some of the key definitions, bitstream and coding structures, and concepts of H.264/AVC are the same as in HEVC - hence, they are described below jointly. The aspects of the invention are not limited to H.264/AVC or HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

In the description of existing standards as well as in the description of example embodiments, a syntax element may be defined as an element of data represented in the bitstream. A syntax structure may be defined as zero or more syntax elements present together in the bitstream in a specified order. In the description of existing standards as well as in the description of example embodiments, a phrase "by external means" or "through external means" may be used. For example, an entity, such as a syntax structure or a value of a variable used in the decoding process, may be provided "by external means" to the decoding process. The phrase "by external means" may indicate that the entity is not included in the bitstream created by the encoder, but rather conveyed externally from the bitstream for example using a control protocol. It may alternatively or additionally mean that the entity is not created by the encoder, but may be created for example in the player or decoding control logic or alike that is using the decoder. The decoder may have an interface for inputting the external means, such as variable values.

The elementary unit for the input to an H.264/AVC or HEVC encoder and the output of an H.264/AVC or HEVC decoder, respectively, is a picture. A picture given as an input to an encoder may also referred to as a source picture, and a picture decoded by a decoded may be referred to as a decoded picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of H.264/AVC and/or HEVC. A component may be defined as an array or single sample from one of the three sample arrays arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:

- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

In H.264/AVC and HEVC, it is possible to code sample arrays as separate color planes into the bitstream and respectively decode separately coded color planes from the bitstream. When separate color planes are in use, each one of them is separately processed (by the encoder and/or the decoder) as a picture with monochrome sampling.

A partitioning may be defined as a division of a set into subsets such that each element of the set is in exactly one of the subsets.

In H.264/AVC, a macroblock is a 16x16 block of luma samples and the corresponding blocks of chroma samples. For example, in the 4:2:0 sampling pattern, a macroblock contains one 8x8 block of chroma samples per each chroma component. In H.264/AVC, a picture is partitioned to one or more slice groups, and a slice group contains one or more slices. In H.264/AVC, a slice consists of an integer number of macroblocks ordered consecutively in the raster scan within a particular slice group.

When describing the operation of HEVC encoding and/or decoding, the following terms may be used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples.

In some video codecs, such as High Efficiency Video Coding (HEVC) codec, video pictures are divided into coding units (CU) covering the area of the picture. A CU consists of one or more prediction units (PU) defining the prediction process for the samples within the CU and one or more transform units (TU) defining the prediction error coding process for the samples in the said CU. Typically, a CU consists of a square block of samples with a size selectable from a predefined set of possible CU sizes. A CU with the maximum allowed size may be named as LCU (largest coding unit) or coding tree unit (CTU) and the video picture is divided into non-overlapping LCUs. An LCU can be further split into a combination of smaller CUs, e.g. by recursively splitting the LCU and resultant CUs. Each resulting CU typically has at least one PU and at least one TU associated with it. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs).

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

The filtering may for example include one more of the following: deblocking, sample adaptive offset (SAO), and/or adaptive loop filtering (ALF). H.264/AVC includes a deblocking, whereas HEVC includes both deblocking and SAO.

In typical video codecs the motion information is indicated with motion vectors associated with each motion compensated image block, such as a prediction unit. Each of these motion vectors represents the displacement of the image block in the picture to be coded (in the encoder side) or decoded (in the decoder side) and the prediction source block in one of the previously coded or decoded pictures. In order to represent motion vectors efficiently those are typically coded differentially with respect to block specific predicted motion vectors. In typical video codecs the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signaling the chosen candidate as the motion vector predictor. In addition to predicting the motion vector values, it can be predicted which reference picture(s) are used for motion-compensated prediction and this prediction information may be represented for example by a reference index of previously coded/decoded picture. The reference index is typically predicted from adjacent blocks and/or co-located blocks in temporal reference picture. Moreover, typical high efficiency video codecs employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signaled among a list of motion field candidate list filled with motion field information of available adjacent/co-located blocks.

Typical video codecs enable the use of uni-prediction, where a single prediction block is used for a block being (de)coded, and bi-prediction, where two prediction blocks are combined to form the prediction for a block being (de)coded. Some video codecs enable weighted prediction, where the sample values of the prediction blocks are weighted prior to adding residual information. For example, multiplicative weighting factor and an additive offset which can be applied. In explicit weighted prediction, enabled by some video codecs, a weighting factor and offset may be coded for example in the slice header for each allowable reference picture index. In implicit weighted prediction, enabled by some video codecs, the weighting factors and/or offsets are not coded but are derived e.g. based on the relative picture order count (POC) distances of the reference pictures.

In typical video codecs the prediction residual after motion compensation is first transformed with a transform kernel (like DCT) and then coded. The reason for this is that often there still exists some correlation among the residual and transform can in many cases help reduce this correlation and provide more efficient coding.

Typical video encoders utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R, \qquad (1)$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

In the HEVC standard, a picture can be partitioned in tiles, which are rectangular and contain an integer number of LCUs. In the HEVC standard, the partitioning to tiles may form a regular grid, where heights and widths of tiles differ from each other by one LCU at the maximum, or the partitioning to tiles may follow a list of indicated tile column widths (in LCUs) and tile row heights (in LCUs). Tiles are ordered in the bitstream consecutively in the raster scan within the picture. A tile may contain an integer number of slices. While the concept of tiles is here described with reference to HEVC, it needs to be understood that the same or similar concept may be available in other coding and decoding methods, and that the phrase tile may be used below as a generic term not limited to HEVC tiles.

A set of tiles of a particular location in a sequence of pictures can be encoded in a constrained manner so that decoding of the set of tiles of that particular location in the sequence of pictures does not require the sample values of outside the set of tiles. In HEVC, such a constraint can be indicated with a temporal motion-constrained tile sets SEI message. The temporal motion-constrained tile sets SEI message indicates that the inter prediction process is constrained (by encoding choices) such that no sample value outside each identified tile set, and no sample value at a fractional sample position that is derived using one or more sample values outside the identified tile set, is used for inter prediction of any sample within the identified tile set. The set of tiles can therefore be regarded as an independently decodable region.

Video coding standards and specifications may allow encoders to divide a coded picture to coded slices or alike. In-picture prediction is typically disabled across slice boundaries. Thus, slices can be regarded as a way to split a coded picture to independently decodable pieces. In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighboring macroblock or CU may be regarded as unavailable for intra prediction, if the neighboring macroblock or CU resides in a different slice.

In the HEVC, a slice consists of an integer number of LCUs. The LCUs are scanned in the raster scan order of LCUs within tiles or within a picture, if tiles are not in use. A slice may contain an integer number of tiles or a slice can be contained in a tile. Within an LCU, the CUs have a specific scan order.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A bytestream format has been specified in H.264/AVC and HEVC for transmission or storage environments that do not provide framing structures. The bytestream format separates NAL units from each other by attaching a start code in front of each NAL unit. To avoid false detection of NAL unit boundaries, encoders run a byte-oriented start code emulation prevention algorithm, which adds an emulation prevention byte to the NAL unit payload if a start code would have occurred otherwise. In order to enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. In H.264/AVC and HEVC, the NAL unit header indicates the type of the NAL unit.

H.264/AVC NAL unit header includes a 2-bit nal_ref_idc syntax element, which when equal to 0 indicates that a coded slice contained in the NAL unit is a part of a non-reference picture and when greater than 0 indicates that a coded slice contained in the NAL unit is a part of a reference picture. The header for SVC and MVC NAL units may additionally contain various indications related to the scalability and multiview hierarchy.

In HEVC, a two-byte NAL unit header is used for all specified NAL unit types. The NAL unit header contains one reserved bit, a six-bit NAL unit type indication, a three-bit nuh temporal_id_plus1 indication for temporal level (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to TID does not use any picture having a TemporalId greater than TID as inter prediction reference. A sub-layer or a temporal sub-layer may be defined to be a temporal scalable layer of a temporal scalable bitstream, consisting of VCL NAL units with a particular value of the TemporalId variable and the associated non-VCL NAL units. nuh_layer_id can be understood as a scalability layer identifier.

NAL units can be categorized into Video Coding Layer (VCL) NAL units and non-VCL NAL units. VCL NAL units are typically coded slice NAL units. In H.264/AVC, coded slice NAL units contain syntax elements representing one or more coded macroblocks, each of which corresponds to a block of samples in the uncompressed picture. In HEVC, VCL NAL units contain syntax elements representing one or more CU.

In H.264/AVC, a coded slice NAL unit can be indicated to be a coded slice in an Instantaneous Decoding Refresh (IDR) picture or coded slice in a non-IDR picture.

In HEVC, nal_unit_type of a VCL NAL unit may be considered to indicate the picture type. In HEVC, abbreviations for picture types may be defined as follows: trailing (TRAIL) picture, Temporal Sub-layer Access (TSA), Step-wise Temporal Sub-layer Access (STSA), Random Access Decodable Leading (RADL) picture, Random Access Skipped Leading (RASL) picture, Broken Link Access (BLA) picture, Instantaneous Decoding Refresh (IDR) picture, Clean Random Access (CRA) picture. The picture types may be categorized into intra random access point (IRAP) picture and non-IRAP pictures.

In HEVC, a Random Access Point (RAP) picture, which may also be referred to as an intra random access point (IRAP) picture, is a picture where each slice or slice segment has nal_unit_type in the range of 16 to 23, inclusive. A IRAP picture in an independent layer contains only intra-coded slices. An IRAP picture belonging to a predicted layer with nuh_layer_id value currLayerId may contain P, B, and I slices, cannot use inter prediction from other pictures with nuh_layer_id equal to currLayerId, and may use inter-layer prediction from its direct reference layers. In the present version of HEVC, an IRAP picture may be a BLA picture, a CRA picture or an IDR picture. The first picture in a bitstream containing a base layer is an IRAP picture at the base layer. Provided the necessary parameter sets are available when they need to be activated, an IRAP picture at an independent layer and all subsequent non-RASL pictures at the independent layer in decoding order can be correctly decoded without performing the decoding process of any pictures that precede the IRAP picture in decoding order. The IRAP picture belonging to a predicted layer with nuh_layer_id value currLayerId and all subsequent non-RASL pictures with nuh_layer_id equal to currLayerId in decoding order can be correctly decoded without performing the decoding process of any pictures with nuh_layer_id equal to currLayerId that precede the IRAP picture in decoding order, when the necessary parameter sets are available when they need to be activated and when the decoding of each direct reference layer of the layer with nuh_layer_id equal to currLayerId has been initialized (i.e. when LayerInitializedFlag[ refLayerId ] is equal to 1 for refLayerId equal to all nuh_layer_id values of the direct reference layers of the layer with nuh_layer_id equal to currLayerId). There may be pictures in a bitstream that contain only intra-coded slices that are not IRAP pictures.

In HEVC a CRA picture may be the first picture in the bitstream in decoding order, or may appear later in the bitstream. CRA pictures in HEVC allow so-called leading pictures that follow the CRA picture in decoding order but precede it in output order.

Some of the leading pictures, so-called RASL pictures, may use pictures decoded before the CRA picture as a reference. Pictures that follow a CRA picture in both decoding and output order are decodable if random access is performed at the CRA picture, and hence clean random access is achieved similarly to the clean random access functionality of an IDR picture.

A CRA picture may have associated RADL or RASL pictures. When a CRA picture is the first picture in the bitstream in decoding order, the CRA picture is the first picture of a coded video sequence in decoding order, and any associated RASL pictures are not output by the decoder and may not be decodable, as they may contain references to pictures that are not present in the bitstream.

A leading picture is a picture that precedes the associated RAP picture in output order. The associated RAP picture is the previous RAP picture in decoding order (if present). A leading picture is either a RADL picture or a RASL picture.

All RASL pictures are leading pictures of an associated BLA or CRA picture. When the associated RAP picture is a BLA picture or is the first coded picture in the bitstream, the RASL picture is not output and may not be correctly decodable, as the RASL picture may contain references to pictures that are not present in the bitstream. However, a RASL picture can be correctly decoded if the decoding had started from a RAP picture before the associated RAP picture of the RASL picture. RASL pictures are not used as reference pictures for the decoding process of non-RASL pictures. When present, all RASL pictures precede, in decoding order, all trailing pictures of the same associated RAP picture. In some drafts of the HEVC standard, a RASL picture was referred to a Tagged for Discard (TFD) picture.

All RADL pictures are leading pictures. RADL pictures are not used as reference pictures for the decoding process of trailing pictures of the same associated RAP picture. When present, all RADL pictures precede, in decoding order, all trailing pictures of the same associated RAP picture. RADL pictures do not refer to any picture preceding the associated RAP picture in decoding order and can therefore be correctly decoded when the decoding starts from the associated RAP picture. In some drafts of the HEVC standard, a RADL picture was referred to a Decodable Leading Picture (DLP).

When a part of a bitstream starting from a CRA picture is included in another bitstream, the RASL pictures associated with the CRA picture might not be correctly decodable, because some of their reference pictures might not be present in the combined bitstream. To make such a splicing operation straightforward, the NAL unit type of the CRA picture can be changed to indicate that it is a BLA picture. The RASL pictures associated with a BLA picture may not be correctly decodable hence are not be output/displayed. Furthermore, the RASL pictures associated with a BLA picture may be omitted from decoding.

A BLA picture may be the first picture in the bitstream in decoding order, or may appear later in the bitstream. Each BLA picture begins a new coded video sequence, and has similar effect on the decoding process as an IDR picture. However, a BLA picture contains syntax elements that specify a non-empty reference picture set. When a BLA picture has nal_unit_type equal to BLA_W_LP, it may have associated RASL pictures, which are not output by the decoder and may not be decodable, as they may contain references to pictures that are not present in the bitstream. When a BLA picture has nal_unit_type equal to BLA_W_LP, it may also have associated RADL pictures, which are specified to be decoded. When a BLA picture has nal_unit_type equal to BLA_W_DLP, it does not have associated RASL pictures but may have associated RADL pictures, which are specified to be decoded. When a BLA picture has nal_unit_type equal to BLA_N_LP, it does not have any associated leading pictures.

An IDR picture having nal_unit_type equal to IDR_N_LP does not have associated leading pictures present in the bitstream. An IDR picture having nal_unit_type equal to IDR_W_LP does not have associated RASL pictures present in the bitstream, but may have associated RADL pictures in the bitstream.

When the value of nal_unit_type is equal to TRAIL_N, TSA_N, STSA_N, RADL_N, RASL_N, RSV_VCL_N10, RSV_VCL_N12, or RSV_VCL_N14, the decoded picture is not used as a reference for any other picture of the same temporal sub-layer. That is, in HEVC, when the value of nal_unit_type is equal to TRAIL_N, TSA_N, STSA_N, RADL_N, RASL_N, RSV_VCL_N10, RSV_VCL_N12, or RSV_VCL_N14, the decoded picture is not included in any of RefPicSet-StCurrBefore, RefPicSetStCurrAfter and RefPicSetLtCurr of any picture with the same value of TemporalId. A coded picture with nal_unit_type equal to TRAIL_N, TSA_N, STSA_N, RADL_N, RASL_N, RSV_VCL_N10, RSV_VCL_N12, or RSV_VCL_N14 may be discarded without affecting the decodability of other pictures with the same value of TemporalId.

A trailing picture may be defined as a picture that follows the associated RAP picture in output order. Any picture that is a trailing picture does not have nal_unit_type equal to RADL_N, RADL_R, RASL_N or RASL_R. Any picture that is a leading picture may be constrained to precede, in decoding order, all trailing pictures that are associated with the same RAP picture. No RASL pictures are present in the bitstream that are associated with a BLA picture having nal_unit_type equal to BLA_W_DLP or BLA_N_LP. No RADL pictures are present in the bitstream that are associated with a BLA picture having nal_unit_type equal to BLA_N_LP or that are associated with an IDR picture having nal_unit_type equal to IDR_N_LP. Any RASL picture associated with a CRA or BLA picture may be constrained to precede any RADL picture associated with the CRA or BLA picture in output order. Any RASL picture associated with a CRA picture may be constrained to follow, in output order, any other RAP picture that precedes the CRA picture in decoding order.

In HEVC there are two picture types, the TSA and STSA picture types that can be used to indicate temporal sub-layer switching points. If temporal sub-layers with TemporalId up to N had been decoded until the TSA or STSA picture (exclusive) and the TSA or STSA picture has TemporalId equal to N+1, the TSA or STSA picture enables decoding of all subsequent pictures (in decoding order) having TemporalId equal to N+1. The TSA picture type may impose restrictions on the TSA picture itself and all pictures in the same sub-layer that follow the TSA picture in decoding order. None of these pictures is allowed to use inter prediction from any picture in the same sub-layer that precedes the TSA picture in decoding order. The TSA definition may further impose restrictions on the pictures in higher sub-layers that follow the TSA picture in decoding order. None of these pictures is allowed to refer a picture that precedes the TSA picture in decoding order if that picture belongs to the same or higher sub-layer as the TSA picture. TSA pictures have TemporalId greater than 0. The STSA is similar to the TSA picture but does not impose restrictions on the pictures in higher sub-layers that follow the STSA picture in decoding order and hence enable up-switching only onto the sub-layer where the STSA picture resides.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values. An access unit delimiter NAL unit, when present, may be required to be the first NAL unit, in decoding order, of an access unit and can therefore be used to indicate the start of an access unit. It has been proposed that an indicator, such as an SEI message or a dedicated NAL unit, for a coded unit completion can be included in a bitstream or decoded from a bitstream. The coded unit completion indicator may additionally comprise information whether it signifies an end of a coded picture unit, in which case it may additionally comprise information of a combination of layers for which the coded unit completion indicator signifies the end of an access unit.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. There are three NAL units specified in H.264/AVC to carry sequence parameter sets: the sequence parameter set NAL unit containing all the data for H.264/AVC VCL NAL units in the sequence, the sequence parameter set extension NAL unit containing the data for auxiliary coded pictures, and the subset sequence parameter set for MVC and SVC VCL NAL units. In HEVC a sequence parameter set RBSP includes parameters that can be referred to by one or more picture parameter set RBSPs or one or more SEI NAL units containing a buffering period SEI message. A picture parameter set contains such parameters that are likely to be unchanged in several coded pictures. A picture parameter set RBSP may include parameters that can be referred to by the coded slice NAL units of one or more coded pictures.

In HEVC, a video parameter set (VPS) may be defined as a syntax structure containing syntax elements that apply to zero or more entire coded video sequences as determined by the content of a syntax element found in the SPS referred to by a syntax element found in the PPS referred to by a syntax element found in each slice segment header.

A video parameter set RBSP may include parameters that can be referred to by one or more sequence parameter set RBSPs.

The relationship and hierarchy between video parameter set (VPS), sequence parameter set (SPS), and picture parameter set (PPS) may be described as follows. VPS resides one level above SPS in the parameter set hierarchy and in the context of scalability and/or 3D video. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

VPS may provide information about the dependency relationships of the layers in a bitstream, as well as many other information that are applicable to all slices across all (scalability or view) layers in the entire coded video sequence. VPS may be considered to comprise two parts, the base VPS and a VPS extension, where the VPS extension may be optionally present. In HEVC, the base VPS may be considered to comprise the video_parameter_set_rbsp( ) syntax structure without the vps_extension( ) syntax structure. The video_parameter_set_rbsp( ) syntax structure was primarily specified already for HEVC version 1 and includes syntax elements which may be of use for base layer decoding. In HEVC, the VPS extension may be considered to comprise the vps_extension( ) syntax structure. The vps_extension( ) syntax structure was specified in HEVC version 2 primarily for multi-layer extensions and comprises syntax elements which may be of use for decoding of one or more non-base layers, such as syntax elements indicating layer dependency relations.

H.264/AVC and HEVC syntax allows many instances of parameter sets, and each instance is identified with a unique identifier. In order to limit the memory usage needed for parameter sets, the value range for parameter set identifiers has been limited. In H.264/AVC and HEVC, each slice header includes the identifier of the picture parameter set that is active for the decoding of the picture that contains the slice, and each picture parameter set contains the identifier of the active sequence parameter set. Consequently, the transmission of picture and sequence parameter sets does not have to be accurately synchronized with the transmission of slices. Instead, it is sufficient that the active sequence and picture parameter sets are received at any moment before they are referenced, which allows transmission of parameter sets "out-of-band" using a more reliable transmission mechanism compared to the protocols used for the slice data. For example, parameter sets can be included as a parameter in the session description for Real-time Transport Protocol (RTP) sessions. If parameter sets are transmitted in-band, they can be repeated to improve error robustness.

A parameter set may be activated by a reference from a slice or from another active parameter set or in some cases from another syntax structure such as a buffering period SEI message.

A SEI NAL unit may contain one or more SEI messages, which are not required for the decoding of output pictures but may assist in related processes, such as picture output timing, rendering, error detection, error concealment, and resource reservation. Several SEI messages are specified in H.264/AVC and HEVC, and the user data SEI messages enable organizations and companies to specify SEI messages for their own use. H.264/AVC and HEVC contain the syntax and semantics for the specified SEI messages but no process for handling the messages in the recipient is defined. Consequently, encoders are required to follow the H.264/AVC standard or the HEVC standard when they create SEI messages, and decoders conforming to the H.264/AVC standard or the HEVC standard, respectively, are not required to process SEI messages for output order conformance. One of the reasons to include the syntax and semantics of SEI messages in H.264/AVC and HEVC is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

In HEVC, there are two types of SEI NAL units, namely the suffix SEI NAL unit and the prefix SEI NAL unit, having a different nal_unit_type value from each other. The SEI message(s) contained in a suffix SEI NAL unit are associated with the VCL NAL unit preceding, in decoding order, the suffix SEI NAL unit. The SEI message(s) contained in a prefix SEI NAL unit are associated with the VCL NAL unit following, in decoding order, the prefix SEI NAL unit.

A coded picture is a coded representation of a picture. A coded picture in H.264/AVC comprises the VCL NAL units that are required for the decoding of the picture. In H.264/AVC, a coded picture can be a primary coded picture or a redundant coded picture. A primary coded picture is used in the decoding process of valid bitstreams, whereas a redundant coded picture is a redundant representation that should only be decoded when the primary coded picture cannot be successfully decoded. In HEVC, no redundant coded picture has been specified.

In H.264/AVC, an access unit (AU) comprises a primary coded picture and those NAL units that are associated with it. In H.264/AVC, the appearance order of NAL units within an access unit is constrained as follows. An optional access unit delimiter NAL unit may indicate the start of an access unit. It is followed by zero or more SEI NAL units. The coded slices of the primary coded picture appear next. In H.264/AVC, the coded slice of the primary coded picture may be followed by coded slices for zero or more redundant coded pictures. A redundant coded picture is a coded representation of a picture or a part of a picture. A redundant coded picture may be decoded if the primary coded picture is not received by the decoder for example due to a loss in transmission or a corruption in physical storage medium.

In HEVC, a coded picture may be defined as a coded representation of a picture containing all coding tree units of the picture. In HEVC, an access unit (AU) may be defined as a set of NAL units that are associated with each other according to a specified classification rule, are consecutive in decoding order, and contain at most one picture with any specific value of nuh_layer_id. In addition to containing the VCL NAL units of the coded picture, an access unit may also contain non-VCL NAL units.

It may be required that coded pictures appear in certain order within an access unit. For example a coded picture with nuh_layer_id equal to nuhLayerIdA may be required to precede, in decoding order, all coded pictures with nuh_layer_id greater than nuhLayerIdA in the same access unit.

In HEVC, a picture unit may be defined as a set of NAL units that contain all VCL NAL units of a coded picture and their associated non-VCL NAL units. An associated VCL NAL unit for a non-VCL NAL unit may be defined as the preceding VCL NAL unit, in decoding order, of the non-VCL NAL unit for certain types of non-VCL NAL units and the next VCL NAL unit, in decoding order, of the non-VCL NAL unit for other types of non-VCL NAL units. An associated non-VCL NAL unit for a VCL NAL unit may be defined to be the non-VCL NAL unit for which the VCL NAL unit is the associated VCL NAL unit. For example, in HEVC, an associated VCL NAL unit may be defined as the preceding VCL NAL unit in decoding order for a non-VCL NAL unit with nal_unit_type equal to EOS_NUT, EOB_NUT, FD_NUT, or SUFFIX_SEI_NUT, or in the ranges of RSV_NVCL45..RSV_NVCL47 or UNSPEC56..UNSPEC63; or otherwise the next VCL NAL unit in decoding order.

A bitstream may be defined as a sequence of bits, in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. The end of the first bitstream may be indicated by a specific NAL unit, which may be referred to as the end of bitstream (EOB) NAL unit and which is the last NAL unit of the bitstream. In HEVC and its current draft extensions, the EOB NAL unit is required to have nuh_layer_id equal to 0.

In H.264/AVC, a coded video sequence is defined to be a sequence of consecutive access units in decoding order from an IDR access unit, inclusive, to the next IDR access unit, exclusive, or to the end of the bitstream, whichever appears earlier.

In HEVC, a coded video sequence (CVS) may be defined, for example, as a sequence of access units that consists, in decoding order, of an IRAP access unit with NoRaslOutputFlag equal to 1, followed by zero or more access units that are not IRAP access units with NoRaslOutputFlag equal to 1, including all subsequent access units up to but not including any subsequent access unit that is an IRAP access unit with NoRaslOutputFlag equal to 1. An IRAP access unit may be defined as an access unit in which the base layer picture is an IRAP picture. The value of NoRaslOutputFlag is equal to 1 for each IDR picture, each BLA picture, and each IRAP picture that is the first picture in that particular layer in the bitstream in decoding order, is the first IRAP picture that follows an end of sequence NAL unit having the same value of nuh_layer_id in decoding order. In multi-layer HEVC, the value of NoRaslOutputFlag is equal to 1 for each IRAP picture when its nuh_layer_id is such that LayerInitializedFlag[ nuh_layer_id ] is equal to 0 and LayerInitializedFlag[ refLayerId ] is equal to 1 for all values of refLayerId equal to IdDirectRefLayer[ nuh_layer_id ][ j ], where j is in the range of 0 to NumDirectRefLayers[ nuh_layer_id ] - 1, inclusive. Otherwise, the value of NoRaslOutputFlag is equal to HandleCraAsBlaFlag. NoRaslOutputFlag equal to 1 has an impact that the RASL pictures associated with the IRAP picture for which the NoRaslOutputFlag is set are not output by the decoder. There may be means to provide the value of HandleCraAsBlaFlag to the decoder from an external entity, such as a player or a receiver, which may control the decoder. HandleCraAsBlaFlag may be set to 1 for example by a player that seeks to a new position in a bitstream or tunes into a broadcast and starts decoding and then starts decoding from a CRA picture. When HandleCraAsBlaFlag is equal to 1 for a CRA picture, the CRA picture is handled and decoded as if it were a BLA picture.

In HEVC, a coded video sequence may additionally or alternatively (to the specification above) be specified to end, when a specific NAL unit, which may be referred to as an end of sequence (EOS) NAL unit, appears in the bitstream and has nuh_layer_id equal to 0.

In HEVC, a coded video sequence group (CVSG) may be defined, for example, as one or more consecutive CVSs in decoding order that collectively consist of an IRAP access unit that activates a VPS RBSP firstVpsRbsp that was not already active followed by all subsequent access units, in decoding order, for which firstVpsRbsp is the active VPS RBSP up to the end of the bitstream or up to but excluding the access unit that activates a different VPS RBSP than firstVpsRbsp, whichever is earlier in decoding order.

The bitstream syntax of H.264/AVC and HEVC indicates whether a particular picture is a reference picture for inter prediction of any other picture. Pictures of any coding type (I, P, B) can be reference pictures or non-reference pictures in H.264/AVC and HEVC.

In HEVC, a reference picture set (RPS) syntax structure and decoding process are used. A reference picture set valid or active for a picture includes all the reference pictures used as reference for the picture and all the reference pictures that are kept marked as "used for reference" for any subsequent pictures in decoding order. There are six subsets of the reference picture set, which are referred to as namely RefPicSetStCurr0 (a.k.a. RefPicSetStCurrBefore), RefPicSetStCurr1 (a.k.a. RefPicSetStCurrAfter), RefPicSetStFoll0, RefPicSetStFoll1, RefPicSetLtCurr, and RefPic-SetLtFoll. RefPicSetStFoll0 and RefPicSetStFoll1 may also be considered to form jointly one subset RefPicSetStFoll. The notation of the six subsets is as follows. "Curr" refers to reference pictures that can be included in the reference picture lists of the current picture and hence may be used as inter prediction reference for the current picture. "Foil" refers to reference pictures that are not included in the reference picture lists of the current picture but may be used in subsequent pictures in decoding order as reference pictures. "St" refers to short-term reference pictures, which may generally be identified through a certain number of least significant bits of their POC value. "Lt" refers to long-term reference pictures, which are specifically identified and generally have a greater difference of POC values relative to the current picture than what can be represented by the mentioned certain number of least significant bits. "0" refers to those reference pictures that have a smaller POC value than that of the current picture. "1" refers to those reference pictures that have a greater POC value than that of the current picture. RefPicSetStCurr0, RefPicSetStCurr1, RefPicSetStFoll0 and RefPicSetStFoll1 are collectively referred to as the short-term subset of the reference picture set. RefPicSetLtCurr and RefPicSetLtFoll are collectively referred to as the long-term subset of the reference picture set.

In HEVC, a reference picture set may be specified in a sequence parameter set and taken into use in the slice header through an index to the reference picture set. A reference picture set may also be specified in a slice header. A reference picture set may be coded independently or may be predicted from another reference picture set (known as inter-RPS prediction). In both types of reference picture set coding, a flag (used_by_curr_pic_X_flag) is additionally sent for each reference picture indicating whether the reference picture is used for reference by the current picture (included in a *Curr list) or not (included in a *Foll list). Pictures that are included in the reference picture set used by the current slice are marked as "used for reference", and pictures that are not in the reference picture set used by the current slice are marked as "unused for reference". If the current picture is an IDR picture, RefPicSetStCurr0, RefPicSetStCurr1, RefPicSetStFoll0, RefPicSetStFoll1, RefPicSetLtCurr, and RefPicSetLtFoll are all set to empty.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

In many coding modes of H.264/AVC and HEVC, the reference picture for inter prediction is indicated with an index to a reference picture list. The index may be coded with variable length coding, which usually causes a smaller index to have a shorter value for the corresponding syntax element. In H.264/AVC and HEVC, two reference picture lists (reference picture list 0 and reference picture list 1) are generated for each bi-predictive (B) slice, and one reference picture list (reference picture list 0) is formed for each inter-coded (P) slice.

A reference picture list, such as reference picture list 0 and reference picture list 1, is typically constructed in two steps: First, an initial reference picture list is generated. The initial reference picture list may be generated for example on the basis of frame_num, POC, temporal_id (or TemporalId or alike), or information on the prediction hierarchy such as GOP structure, or any combination thereof. Second, the initial reference picture list may be reordered by reference picture list reordering (RPLR) commands, also known as reference picture list modification syntax structure, which may be contained in slice headers. In H.264/AVC, the RPLR commands indicate the pictures that are ordered to the beginning of the respective reference picture list. This second step may also be referred to as the reference picture list modification process, and the RPLR commands may be included in a reference picture list modification syntax structure. If reference picture sets are used, the reference picture list 0 may be initialized to contain RefPicSetStCurr0 first, followed by RefPicSetStCurr1, followed by RefPicSetLtCurr. Reference picture list 1 may be initialized to contain RefPicSetStCurr1 first, followed by RefPicSetStCurr0. In HEVC, the initial reference picture lists may be modified through the reference picture list modification syntax structure, where pictures in the initial reference picture lists may be identified through an entry index to the list. In other words, in HEVC, reference picture list modification is encoded into a syntax structure comprising a loop over each entry in the final reference picture list, where each loop entry is a fixed-length coded index to the initial reference picture list and indicates the picture in ascending position order in the final reference picture list.

Many coding standards, including H.264/AVC and HEVC, may have decoding process to derive a reference picture index to a reference picture list, which may be used to indicate which one of the multiple reference pictures is used for inter prediction for a particular block. A reference picture index may be coded by an encoder into the bitstream is some inter coding modes or it may be derived (by an encoder and a decoder) for example using neighboring blocks in some other inter coding modes.

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:

- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer. Quality scalability may be further categorized into fine-grain or fine-granularity scalability (FGS), medium-grain or medium-granularity scalability (MGS), and/or coarse-grain or coarse-granularity scalability (CGS), as described below.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- Bit-depth scalability: Base layer pictures are coded at lower bit-depth (e.g. 8 bits) than enhancement layer pictures (e.g. 10 or 12 bits).
- Dynamic range scalability: Scalable layers represent a different dynamic range and/or images obtained using a different tone mapping function and/or a different optical transfer function.
- Chroma format scalability: Base layer pictures provide lower spatial resolution in chroma sample arrays (e.g. coded in 4:2:0 chroma format) than enhancement layer pictures (e.g. 4:4:4 format).
- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.
- View scalability, which may also be referred to as multiview coding. The base layer represents a first view, whereas an enhancement layer represents a second view.
- Depth scalability, which may also be referred to as depth-enhanced coding. A layer or some layers of a bitstream may represent texture view(s), while other layer or layers may represent depth view(s).
- Region-of-interest scalability (as described below).
- Interlaced-to-progressive scalability (also known as field-to-frame scalability): coded interlaced source content material of the base layer is enhanced with an enhancement layer to represent progressive source content. The coded interlaced source content in the base layer may comprise coded fields, coded frames representing field pairs, or a mixture of them. In the interlace-to-progressive scalability, the base-layer picture may be resampled so that it becomes a suitable reference picture for one or more enhancement-layer pictures.
- Hybrid codec scalability (also known as coding standard scalability): In hybrid codec scalability, the bitstream syntax, semantics and decoding process of the base layer and the enhancement layer are specified in different video coding standards. Thus, base layer pictures are coded according to a different coding standard or format than enhancement layer pictures. For example, the base layer may be coded with H.264/AVC and an enhancement layer may be coded with an HEVC multi-layer extension. An external base layer picture may be defined as a decoded picture that is provided by external means for the enhancement-layer decoding process and that is treated like a decoded base-layer picture for the enhancement layer decoding process. SHVC and MV-HEVC allow the use of external base layer pictures.

It should be understood that many of the scalability types may be combined and applied together. For example color gamut scalability and bit-depth scalability may be combined.

The term layer may be used in context of any type of scalability, including view scalability and depth enhancements. An enhancement layer may refer to any type of an enhancement, such as SNR, spatial, multiview, depth, bit-depth, chroma format, and/or color gamut enhancement. A base layer may refer to any type of a base video sequence, such as a base view, a base layer for SNR/spatial scalability, or a texture base view for depth-enhanced video coding.

Various technologies for providing three-dimensional (3D) video content are currently investigated and developed. It may be considered that in stereoscopic or two-view video, one video sequence or view is presented for the left eye while a parallel view is presented for the right eye. More than two parallel views may be needed for applications which enable viewpoint switching or for autostereoscopic displays which may present a large number of views simultaneously and let the viewers to observe the content from different viewpoints.

A view may be defined as a sequence of pictures representing one camera or viewpoint. The pictures representing a view may also be called view components. In other words, a view component may be defined as a coded representation of a view in a single access unit. In multiview video coding, more than one view is coded in a bitstream. Since views are typically intended to be displayed on stereoscopic or multiview autostereoscopic display or to be used for other 3D arrangements, they typically represent the same scene and are content-wise partly overlapping although representing different viewpoints to the content. Hence, inter-view prediction may be utilized in multiview video coding to take advantage of inter-view correlation and improve compression efficiency. One way to realize inter-view prediction is to include one or more decoded pictures of one or more other views in the reference picture list(s) of a picture being coded or decoded residing within a first view. View scalability may refer to such multiview video coding or multiview video bitstreams, which enable removal or omission of one or more coded views, while the resulting bitstream remains conforming and represents video with a smaller number of views than originally.

In the context of wide-FOV or panoramic picture or video, a view direction may be defined to be a spatial subset of the picture or video that represents a certain direction (e.g. angular direction within a panoramic video) and field-of-view. In the context of multiview video, a view direction may be regarded as the direction of the view, e.g. representing the direction the respective camera pointed when capturing the view.

Region of Interest (ROI) coding may be defined to refer to coding a particular region within a video at a higher fidelity. There exist several methods for encoders and/or other entities to determine ROIs from input pictures to be encoded. For example, face detection may be used and faces may be determined to be ROIs. Additionally or alternatively, in another example, objects that are in focus may be detected and determined to be ROIs, while objects out of focus are determined to be outside ROIs. Additionally or alternatively, in another example, the distance to objects may be estimated or known, e.g. on the basis of a depth sensor, and ROIs may be determined to be those objects that are relatively close to the camera rather than in the background.

ROI scalability may be defined as a type of scalability wherein an enhancement layer enhances only part of a reference-layer picture e.g. spatially, quality-wise, in bit-depth, and/or along other scalability dimensions. As ROI scalability may be used together with other types of scalabilities, it may be considered to form a different categorization of scalability types. There exist several different applications for ROI coding with different requirements, which may be realized by using ROI scalability. For example, an enhancement layer can be transmitted to enhance the quality and/or a resolution of a region in the base layer. A decoder receiving both enhancement and base layer bitstream might decode both layers and overlay the decoded pictures on top of each other and display the final picture.

The spatial correspondence of a reference-layer picture and an enhancement-layer picture may be inferred or may be indicated with one or more types of so-called reference layer location offsets. In HEVC, reference layer location offsets may be included in the PPS by the encoder and decoded from the PPS by the decoder. Reference layer location offsets may be used for but are not limited to achieving ROI scalability. Reference layer location offsets may comprise one or more of scaled reference layer offsets, reference region offsets, and resampling phase sets. Scaled reference layer offsets may be considered to specify the horizontal and vertical offsets between the sample in the current picture that is collocated with the top-left luma sample of the reference region in a decoded picture in a reference layer and the horizontal and vertical offsets between the sample in the current picture that is collocated with the bottom-right luma sample of the reference region in a decoded picture in a reference layer. Another way is to consider scaled reference layer offsets to specify the positions of the corner samples of the upsampled reference region relative to the respective corner samples of the enhancement layer picture. The scaled reference layer offset values may be signed. Reference region offsets may be considered to specify the horizontal and vertical offsets between the top-left luma sample of the reference region in the decoded picture in a reference layer and the top-left luma sample of the same decoded picture as well as the horizontal and vertical offsets between the bottom-right luma sample of the reference region in the decoded picture in a reference layer and the bottom-right luma sample of the same decoded picture. The reference region offset values may be signed. A resampling phase set may be considered to specify the phase offsets used in resampling process of a source picture for inter-layer prediction. Different phase offsets may be provided for luma and chroma components.

Hybrid codec scalability may be used together with any types of scalability, such as temporal, quality, spatial, multi-view, depth-enhanced, auxiliary picture, bit-depth, color gamut, chroma format, and/or ROI scalability. As hybrid codec scalability may be used together with other types of scalabilities, it may be considered to form a different categorization of scalability types.

The use of hybrid codec scalability may be indicated for example in an enhancement layer bitstream. For example, in multi-layer HEVC, the use of hybrid codec scalability may be indicated in the VPS, for example using the syntax element vps_base_layer internal flag.

Scalability may be enabled in two basic ways. Either by introducing new coding modes for performing prediction of pixel values or syntax from lower layers of the scalable representation or by placing the lower layer pictures to a reference picture buffer (e.g. a decoded picture buffer, DPB) of the higher layer. The first approach may be more flexible and thus may provide better coding efficiency in most cases. However, the second, reference frame based scalability, approach may be implemented efficiently with minimal changes to single layer codecs while still achieving majority of the coding efficiency gains available. Essentially a reference frame based scalability codec may be implemented by utilizing the same hardware or software implementation for all the layers, just taking care of the DPB management by external means.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in the DPB. An enhancement layer picture may likewise be reconstructed/decoded to be used as a motion-compensation reference picture for subsequent pictures, in coding/decoding order, within the same layer or as reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of a scalable codec or video coding standard amendment (e.g. SHVC, MV-HEVC, or 3D-HEVC) being used.

The types of inter-layer prediction may comprise, but are not limited to, one or more of the following: inter-layer sample prediction, inter-layer motion prediction, inter-layer residual prediction. In inter-layer sample prediction, at least a subset of the reconstructed sample values of a source picture for inter-layer prediction are used as a reference for predicting sample values of the current picture. In inter-layer motion prediction, at least a subset of the motion vectors of a source picture for inter-layer prediction are used as a reference for predicting motion vectors of the current picture.

Typically, predicting information on which reference pictures are associated with the motion vectors is also included in inter-layer motion prediction. For example, the reference indices of reference pictures for the motion vectors may be inter-layer predicted and/or the picture order count or any other identification of a reference picture may be inter-layer predicted. In some cases, inter-layer motion prediction may also comprise prediction of block coding mode, header information, block partitioning, and/or other similar parameters. In some cases, coding parameter prediction, such as inter-layer prediction of block partitioning, may be regarded as another type of inter-layer prediction. In inter-layer residual prediction, the prediction error or residual of selected blocks of a source picture for inter-layer prediction is used for predicting the current picture. In multiview-plus-depth coding, such as 3D-HEVC, cross-component inter-layer prediction may be applied, in which a picture of a first type, such as a depth picture, may affect the inter-layer prediction of a picture of a second type, such as a conventional texture picture. For example, disparity-compensated inter-layer sample value and/or motion prediction may be applied, where the disparity may be at least partially derived from a depth picture.

The term inter-view prediction may be used interchangeably with inter-layer prediction, when the prediction takes place between different views. In some coding specifications, inter-view prediction may be constrained e.g. to take place between pictures of the same spatial resolution, which may have a consequence that no inter-layer processing, such as resampling or motion field mapping, is required for inter-view prediction.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

A source picture for inter-layer prediction may be defined as a decoded picture that either is, or is used in deriving, an inter-layer reference picture that may be used as a reference picture for prediction of the current picture. In multi-layer HEVC extensions, an inter-layer reference picture is included in an inter-layer reference picture set of the current picture. An inter-layer reference picture may be defined as a reference picture that may be used for inter-layer prediction of the current picture. In the coding and/or decoding process, the inter-layer reference pictures may be treated as long term reference pictures. A reference-layer picture may be defined as a picture in a direct reference layer of a particular layer or a particular picture, such as the current layer or the current picture (being encoded or decoded). A reference-layer picture may but need not be used as a source picture for inter-layer prediction. Sometimes, the terms reference-layer picture and source picture for inter-layer prediction may be used interchangeably.

A source picture for inter-layer prediction may be required to be in the same access unit as the current picture. In some cases, e.g. when no resampling, motion field mapping or other inter-layer processing is needed, the source picture for inter-layer prediction and the respective inter-layer reference picture may be identical. In some cases, e.g. when resampling is needed to match the sampling grid of the reference layer to the sampling grid of the layer of the current picture (being encoded or decoded), inter-layer processing is applied to derive an inter-layer reference picture from the source picture for inter-layer prediction. Examples of such inter-layer processing are described in the next paragraphs.

Inter-layer sample prediction may be comprise resampling of the sample array(s) of the source picture for inter-layer prediction. The encoder and/or the decoder may derive a horizontal scale factor (e.g. stored in variable ScaleFactorX) and a vertical scale factor (e.g. stored in variable ScaleFactorY) for a pair of an enhancement layer and its reference layer for example based on the reference layer location offsets for the pair. If either or both scale factors are not equal to 1, the source picture for inter-layer prediction may be resampled to generate an inter-layer reference picture for predicting the enhancement layer picture. The process and/or the filter used for resampling may be pre-defined for example in a coding standard and/or indicated by the encoder in the bitstream (e.g. as an index among pre-defined resampling processes or filters) and/or decoded by the decoder from the bitstream. A different resampling process may be indicated by the encoder and/or decoded by the decoder and/or inferred by the encoder and/or the decoder depending on the values of the scale factor. For example, when both scale factors are less than 1, a pre-defined downsampling process may be inferred; and when both scale factors are greater than 1, a pre-defined upsampling process may be inferred. Additionally or alternatively, a different resampling process may be indicated by the encoder and/or decoded by the decoder and/or inferred by the encoder and/or the decoder depending on which sample array is processed. For example, a first resampling process may be inferred to be used for luma sample arrays and a second resampling process may be inferred to be used for chroma sample arrays.

Resampling may be performed for example picture-wise (for the entire source picture for inter-layer prediction or for the reference region of the source picture for inter-layer prediction), slice-wise (e.g. for a reference layer region corresponding to an enhancement layer slice) or block-wise (e.g. for a reference layer region corresponding to an enhancement layer coding tree unit). The resampling of the determined region (e.g. a picture, slice, or coding tree unit in an enhancement layer picture) may for example be performed by looping over all sample positions of the determined region and performing a sample-wise resampling process for each sample position. However, it is to be understood that other possibilities for resampling a determined region exist - for example, the filtering of a certain sample location may use variable values of the previous sample location.

A set of tiles of a particular location in a sequence of pictures on a particular predicted layer can be encoded in a constrained manner so that decoding of the set of tiles of that particular location in the sequence of pictures on the particular predicted layer does not require the sample values of outside a reference tile set on a reference layer of the predicted layer. In HEVC, such a constraint can be indicated with an inter-layer constrained tile sets SEI message. The presence of the inter-layer constrained tile sets SEI message indicates that the inter-layer prediction process is constrained such that no sample value outside each associated reference tile set, and no sample value at a fractional sample position that is derived using one or more sample values outside each associated reference tile set, is used for inter-layer prediction of any sample within the identified tile set. The encoding of the identified tile set (on a predicted layer) may also be constrained so that the constraints of the temporal motion-constrained tile sets SEI message are fulfilled (for the identified tile set) and the temporal motion-constrained tile sets SEI message can be encoded for the identified tile set. Likewise, additionally or alternatively, the encoding of the reference tile set (on a reference layer of the predicted layer) may also be constrained so that the constraints of the temporal motion-constrained tile sets SEI message are fulfilled (for the reference tile set) and the temporal motion-constrained tile sets SEI message can be encoded for the reference tile set.

SHVC enables the use of weighted prediction or a color-mapping process based on a 3D lookup table (LUT) for (but not limited to) color gamut scalability. The 3D LUT approach may be described as follows. The sample value range of each color components may be first split into two ranges, forming up to 2x2x2 octants, and then the luma ranges can be further split up to four parts, resulting into up to 8x2x2 octants. Within each octant, a cross color component linear model is applied to perform color mapping. For each octant, four vertices are encoded into and/or decoded from the bitstream to represent a linear model within the octant. The color-mapping table is encoded into and/or decoded from the bitstream separately for each color component. Color mapping may be considered to involve three steps: First, the octant to which a given reference-layer sample triplet (Y, Cb, Cr) belongs is determined. Second, the sample locations of luma and chroma may be aligned through applying a color component adjustment process. Third, the linear mapping specified for the determined octant is applied. The mapping may have cross-component nature, i.e. an input value of one color component may affect the mapped value of another color component. Additionally, if inter-layer resampling is also required, the input to the resampling process is the picture that has been color-mapped. The color-mapping may (but needs not to) map samples of a first bit-depth to samples of another bit-depth.

In MV-HEVC and SHVC, the block level syntax and decoding process are not changed for supporting inter-layer texture prediction. Only the high-level syntax has been modified (compared to that of HEVC) so that reconstructed pictures (upsampled if necessary) from a reference layer of the same access unit can be used as the reference pictures for coding the current enhancement layer picture. The inter-layer reference pictures as well as the temporal reference pictures are included in the reference picture lists. The signaled reference picture index is used to indicate whether the current Prediction Unit (PU) is predicted from a temporal reference picture or an inter-layer reference picture. The use of this feature may be controlled by the encoder and indicated in the bitstream for example in a video parameter set, a sequence parameter set, a picture parameter, and/or a slice header. The indication(s) may be specific to an enhancement layer, a reference layer, a pair of an enhancement layer and a reference layer, specific TemporalId values, specific picture types (e.g. RAP pictures), specific slice types (e.g. P and B slices but not I slices), pictures of a specific POC value, and/or specific access units, for example. The scope and/or persistence of the indication(s) may be indicated along with the indication(s) themselves and/or may be inferred.

The reference list(s) in MV-HEVC and SHVC may be initialized using a specific process in which the inter-layer reference picture(s), if any, may be included in the initial reference picture list(s). For example, the temporal references may be firstly added into the reference lists (L0, L1) in the same manner as the reference list construction in HEVC. After that, the inter-layer references may be added after the temporal references. The inter-layer reference pictures may be for example concluded from the layer dependency information, such as the RefLayerId[ i ] variable derived from the VPS extension as described above. The inter-layer reference pictures may be added to the initial reference picture list L0 if the current enhancement-layer slice is a P Slice, and may be added to both initial reference picture lists L0 and L1 if the current enhancement-layer slice is a B Slice. The inter-layer reference pictures may be added to the reference picture lists in a specific order, which can but need not be the same for both reference picture lists. For example, an opposite order of adding inter-layer reference pictures into the initial reference picture list 1 may be used compared to that of the initial reference picture list 0. For example, inter-layer reference pictures may be inserted into the initial reference picture 0 in an ascending order of nuh_layer_id, while an opposite order may be used to initialize the initial reference picture list 1.

In the coding and/or decoding process, the inter-layer reference pictures may be treated as a long term reference pictures.

Inter-layer motion prediction may be realized as follows. A temporal motion vector prediction process, such as TMVP of H.265/HEVC, may be used to exploit the redundancy of motion data between different layers. This may be done as follows: when the decoded base-layer picture is upsampled, the motion data of the base-layer picture is also mapped to the resolution of an enhancement layer. If the enhancement layer picture utilizes motion vector prediction from the base layer picture e.g. with a temporal motion vector prediction mechanism such as TMVP of H.265/HEVC, the corresponding motion vector predictor is originated from the mapped base-layer motion field. This way the correlation between the motion data of different layers may be exploited to improve the coding efficiency of a scalable video coder.

In SHVC and/or alike, inter-layer motion prediction may be performed by setting the inter-layer reference picture as the collocated reference picture for TMVP derivation. A motion field mapping process between two layers may be performed for example to avoid block level decoding process modification in TMVP derivation. The use of the motion field mapping feature may be controlled by the encoder and indicated in the bitstream for example in a video parameter set, a sequence parameter set, a picture parameter, and/or a slice header. The indication(s) may be specific to an enhancement layer, a reference layer, a pair of an enhancement layer and a reference layer, specific TemporalId values, specific picture types (e.g. RAP pictures), specific slice types (e.g. P and B slices but not I slices), pictures of a specific POC value, and/or specific access units, for example. The scope and/or persistence of the indication(s) may be indicated along with the indication(s) themselves and/or may be inferred.

In a motion field mapping process for spatial scalability, the motion field of the upsampled inter-layer reference picture may be attained based on the motion field of the respective source picture for inter-layer prediction. The motion parameters (which may e.g. include a horizontal and/or vertical motion vector value and a reference index) and/or a prediction mode for each block of the upsampled inter-layer reference picture may be derived from the corresponding motion parameters and/or prediction mode of the collocated block in the source picture for inter-layer prediction. The block size used for the derivation of the motion parameters and/or prediction mode in the upsampled inter-layer reference picture may be for example $16\times16$. The $16\times16$ block size is the same as in HEVC TMVP derivation process where compressed motion field of reference picture is used.

In some cases, data in an enhancement layer can be truncated after a certain location, or even at arbitrary positions, where each truncation position may include additional data representing increasingly enhanced visual quality. Such scalability is referred to as fine-grained (granularity) scalability (FGS).

Similarly to MVC, in MV-HEVC, inter-view reference pictures can be included in the reference picture list(s) of the current picture being coded or decoded. SHVC uses multi-loop decoding operation (unlike the SVC extension of H.264/AVC). SHVC may be considered to use a reference index based approach, i.e. an inter-layer reference picture can be included in a one or more reference picture lists of the current picture being coded or decoded (as described above).

For the enhancement layer coding, the concepts and coding tools of HEVC base layer may be used in SHVC, MV-HEVC, and/or alike. However, the additional inter-layer prediction tools, which employ already coded data (including reconstructed picture samples and motion parameters a.k.a motion information) in reference layer for efficiently coding an enhancement layer, may be integrated to SHVC, MV-HEVC, and/or alike codec.

It has been proposed that a bitstream needs not necessarily have a base layer (i.e., a layer with nuh_layer_id equal to a in multi-layer HEVC extensions) included in the bitstream or provided externally (in case of hybrid codec scalability), but the lowest layer may be an independent non-base layer. In some cases the layer with the lowest nuh_layer_id present in the bitstream may be regarded as the base layer of the bitstream.

In HEVC, the VPS flags vps_base_layer internal flag and vps_base_layer available flag may be used to indicate the presence and availability of the base layer as follows: If vps_base_layer_internal_flag is equal to 1 and vps_base_layer available flag is equal to 1, the base layer is present in the bitstream. Otherwise, if vps_base_layer internal flag is equal to a and vps_base_layer available flag is equal to 1, the base layer is provided by external means to the multi-layer HEVC decoding process, i.e. decoded base layer pictures as well as certain variables and syntax elements for the decoded base layer pictures are provided to the multi-layer HEVC decoding process. The base layer that is provided by external means to the multi-layer HEVC decoding process and/or the respective decoded base layer pictures may be referred to as the external base layer. Otherwise, if vps_base_layer_internal_flag is equal to 1 and vps_base_layer available flag is equal to 0, the base layer is not available (neither present in the bitstream nor provided by external means) but the VPS includes information of the base layer as if it were present in the bitstream. Otherwise (vps base_layer internal flag is equal to 0 and vps_base_layer_available_flag is equal to 0), the base layer is not available (neither present in the bitstream nor provided by external means) but the VPS includes information of the base layer as if it were provided by external means.

A coding standard may include a sub-bitstream extraction process, and such is specified for example in SVC, MVC, and HEVC. The sub-bitstream extraction process relates to converting a bitstream, typically by removing NAL units, to a sub-bitstream, which may also be referred to as a bitstream subset. The sub-bitstream still remains conforming to the standard. For example, in HEVC, the bitstream created by excluding all VCL NAL units having a TemporalId value

greater than a selected value and including all other VCL NAL units remains conforming.

The HEVC standard (version 2) includes three sub-bitstream extraction processes. The sub-bitstream extraction process in clause 10 of the HEVC standard is identical to that in clause F.10.1 except that the bitstream conformance requirements for the resulting sub-bitstream are relaxed in clause F.10.1 so that it can be used also for bitstream where the base layer is external (in which case vps_base_layer internal flag is equal to 0) or not available (in which case vps_base_layer available flag is equal to 0). Clause F.10.3 of the HEVC standard (version 2) specifies a sub-bitstream extraction process resulting into a sub-bitstream that does not contain the base layer. All three sub-bitstream extraction processes operate similarly: the sub-bitstream extraction process takes a TemporalId and/or a list of nuh_layer_id values as input and derives a sub-bitstream (also known as a bitstream subset) by removing from the bitstream all NAL units with TemporalId greater than the input TemporalId value or nuh_layer_id value not among the values in the input list of nuh_layer_id values.

A coding standard or system may refer to a term operation point or alike, which may indicate the scalable layers and/or sub-layers under which the decoding operates and/or may be associated with a sub-bitstream that includes the scalable layers and/or sub-layers being decoded. In HEVC, an operation point is defined as bitstream created from another bitstream by operation of the sub-bitstream extraction process with the another bitstream, a target highest TemporalId, and a target layer identifier list as inputs.

An output layer may be defined as a layer whose decoded pictures are output by the decoding process. The output layers may depend on which subset of the multi-layer bitstream is decoded. The pictures output by the decoding process may be further processed, e.g. a color space conversion from the YUV color space to RGB may be performed, and they may be displayed. However, further processing and/or displaying may be considered to be processes external of the decoder and/or the decoding process and might not take place.

In multi-layer video bitstreams, an operation point definition may include a consideration a target output layer set. For example, an operation point may be defined as a bitstream that is created from another bitstream by operation of the sub-bitstream extraction process with the another bitstream, a target highest temporal sub-layer (e.g. a target highest TemporalId), and a target layer identifier list as inputs, and that is associated with a set of output layers. Alternatively, another term, such as an output operation point, may be used when referring to an operation point and the associated set of output layers. For example, in MV-HEVC/SHVC, an output operation point may be defined as a bitstream that is created from an input bitstream by operation of the sub-bitstream extraction process with the input bitstream, a target highest TemporalId, and a target layer identifier list as inputs, and that is associated with a set of output layers.

As scalable multi-layer bitstreams enable decoding of more than one combinations of layers and temporal sub-layers, a multi-layer decoding process may be given as input (by external means) a target output operation point. The output operation point may be provided e.g. by specifying the output layer set (OLS) and the highest temporal sub-layer to be decoded. An OLS may be defined to represent a set of layers, which may be categorized to be either necessary or unnecessary layers. A necessary layer may be defined to be either an output layer, meaning that the pictures of the layer are output by the decoding process, or a reference layer, meaning that its pictures may be directly or indirectly used as a reference for prediction of pictures of any output layer. In multi-layer HEVC extensions, the VPS includes a specification of OLSs, and can also specify buffering requirements and parameters for OLSs. Unnecessary layers may be defined as those layers that are not required to be decoded for reconstructing the output layers but can be included in OLSs for indicating buffering requirements for such sets of layers in which some layers are coded with potential future extensions.

Skip coding of a block, a region, or a picture may be defined in the context of scalable video coding so that the decoded or reconstructed block, region, or picture, respectively, is identical to the inter-layer prediction signal (e.g. the respective block, region, or picture, respectively, of the inter-layer reference picture in case of uni-prediction). No prediction error is coded for a skip coded block, region, or picture, and consequently no prediction error is decoded for a skip coded block, region, or picture. It may be indicated by an encoder and/or decoded by a decoder e.g. block-wise (e.g. using the cu_skip_flag of HEVC or alike) that coded prediction error is not available. It may be pre-defined e.g. in a coding standard, or it may indicated by an encoder and decoded by a decoder that in-loop filtering is turned off for the skip coded block, region, or picture. It may be pre-defined e.g. in a coding standard, or it may indicated by an encoder and decoded by a decoder that weighted prediction is turned off.

A profile may be defined as a subset of the entire bitstream syntax that is specified by a decoding/coding standard or specification. Within the bounds imposed by the syntax of a given profile it is still possible to require a very large variation in the performance of encoders and decoders depending upon the values taken by syntax elements in the bitstream such as the specified size of the decoded pictures. In many applications, it might be neither practical nor economic to implement a decoder capable of dealing with all hypothetical uses of the syntax within a particular profile. In order to deal with this issue, levels may be used. A level may be defined as a specified set of constraints imposed on values of the syntax elements in the bitstream and variables specified in a decoding/coding standard or specification. These constraints may be simple limits on values. Alternatively or in addition, they may take the form of constraints on arithmetic combinations of values (e.g., picture width multiplied by picture height multiplied by number of pictures decoded per second). Other means for specifying constraints for levels may also be used. Some of the constraints specified in a level may for example relate to the maximum picture size, maximum bitrate and maximum data rate in terms of coding units, such as macroblocks, per a time period, such as a second. The same set of levels may be defined for all profiles. It may be preferable for example to increase interoperability of terminals implementing different profiles that most or all aspects of the definition of each level may be common across different profiles. A tier may be defined as specified category of level constraints imposed on values of the syntax elements in the bitstream, where the level constraints are nested within a tier and a decoder conforming to a certain tier and level would be capable of decoding all bitstreams that conform to the same tier or the lower tier of that level or any level below it.

While many earlier video coding standards specified profile-level conformance points applying to a bitstream, multi-layer HEVC extensions specify layer-wise conformance points. To be more exact, a profile-tier-level (PTL) combination is indicated for each necessary layer of each OLS, while even finer-grain temporal-sub-layer-based PTL signaling is allowed, i.e. it is possible to indicate a PTL combination for each temporal subset of each necessary layer of each OLS. Decoder capabilities of HEVC decoders can be indicated as a list of PTL values, where the number of list elements indicates the number of layers supported by the decoder and each PTL value indicates the decoding capability for a layer. Non-base layers that are not inter-layer predicted can be indicated to conform to a single-layer profile, such as the Main profile, while they also require so-called independent non-base layer decoding (INBLD) capability to deal correctly with layer-wise decoding.

In frame-compatible stereoscopic video, a spatial packing of a stereo pair into a single frame is performed at the encoder side as a pre-processing step for encoding and then the frame-packed frames are encoded with a conventional 2D video coding scheme. The output frames produced by the decoder contain constituent frames of a stereo pair. Such a frame packing approach can be generalized to more than two views and/or to other types of video content. For example, pictures of 4 or 8 views may be spatially packed into a single frame as a pre-processing for encoding. In another example, pictures of one or more depth views may be spatially packed with pictures of one or more video views into a single frame as a pre-processing for encoding.

In a typical operation mode of frame packing, the constituent frames packed into a single frame have the same width and height. The spatial packing may use for example a side-by-side or top-bottom format. More generally, the constituent frames may differ in width and/or height and their position within the single frame may be flexible and may be indicated to the decoder side. In some cases, a constituent frame may be split into more than one region within the single frame.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

Hypertext Transfer Protocol (HTTP) has been widely used for the delivery of real-time multimedia content over the Internet, such as in video streaming applications. Several commercial solutions for adaptive streaming over HTTP, such as Microsoft® Smooth Streaming, Apple® Adaptive HTTP Live Streaming and Adobe® Dynamic Streaming, have been launched as well as standardization projects have been carried out. Adaptive HTTP streaming (AHS) was first standardized in Release 9 of 3rd Generation Partnership Project (3GPP) packet-switched streaming (PSS) service (3GPP TS 26.234 Release 9: "Transparent end-to-end packet-switched streaming service (PSS); protocols and codecs"). MPEG took 3GPP AHS Release 9 as a starting point for the MPEG DASH standard (ISO/IEC 23009-1: "Dynamic adaptive streaming over HTTP (DASH)-Part 1: Media presentation description and segment formats," International Standard, 2nd Edition, 2014). MPEG DASH and 3GP-DASH are technically close to each other and may therefore be collectively referred to as DASH. Some concepts, formats, and operations of DASH are described below as an example of a video streaming system, wherein the embodiments may be implemented. The aspects of the invention are not limited to DASH, but rather the description is given for one possible basis on top of which the invention may be partly or fully realized.

In DASH, the multimedia content may be stored on an HTTP server and may be delivered using HTTP. The content may be stored on the server in two parts: Media

Presentation Description (MPD), which describes a manifest of the available content, its various alternatives, their URL addresses, and other characteristics; and segments, which contain the actual multimedia bitstreams in the form of chunks, in a single or multiple files. The MDP provides the necessary information for clients to establish a dynamic adaptive streaming over HTTP. The MPD contains information describing media presentation, such as an HTTP-uniform resource locator (URL) of each Segment to make GET Segment request. To play the content, the DASH client may obtain the MPD e.g. by using HTTP, email, thumb drive, broadcast, or other transport methods. By parsing the MPD, the DASH client may become aware of the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client may select the appropriate encoded alternative and start streaming the content by fetching the segments using e.g. HTTP GET requests. After appropriate buffering to allow for network throughput variations, the client may continue fetching the subsequent segments and also monitor the network bandwidth fluctuations. The client may decide how to adapt to the available bandwidth by fetching segments of different alternatives (with lower or higher bitrates) to maintain an adequate buffer.

In the context of DASH, the following definitions may be used: A media content component or a media component may be defined as one continuous component of the media content with an assigned media component type that can be encoded individually into a media stream. Media content may be defined as one media content period or a contiguous sequence of media content periods. Media content component type may be defined as a single type of media content such as audio, video, or text. A media stream may be defined as an encoded version of a media content component.

In DASH, a hierarchical data model is used to structure media presentation as follows. A media presentation consists of a sequence of one or more Periods, each Period contains one or more Groups, each Group contains one or more Adaptation Sets, each Adaptation Sets contains one or more Representations, each Representation consists of one or more Segments. A Group may be defined as a collection of Adaptation Sets that are not expected to be presented simultaneously. An Adaptation Set may be defined as a set of interchangeable encoded versions of one or several media content components. A Representation is one of the alternative choices of the media content or a subset thereof typically differing by the encoding choice, e.g. by bitrate, resolution, language, codec, etc. The Segment contains certain duration of media data, and metadata to decode and present the included media content. A Segment is identified by a URI and can typically be requested by a HTTP GET request. A Segment may be defined as a unit of data associated with an HTTP-URL and optionally a byte range that are specified by an MPD.

The DASH MPD complies with Extensible Markup Language (XML) and is therefore specified through elements and attribute as defined in XML. The MPD may be specified using the following conventions: Elements in an XML document may be identified by an upper-case first letter and may appear in bold face as **Element.** To express that an element **Element1** is contained in another element **Element2,** one may write **Element2.Element1.** If an element's name consists of two or more combined words, camel-casing may be used, e.g. **ImportantElement.** Elements may be present either exactly once, or the minimum and maximum occurrence may be defined by <minOccurs> ... <maxOccurs>. Attributes in an XML document may be identified by a lower-case first letter as well as they may be preceded by a '@'-sign, e.g. @attribute. To point to a specific attribute @attribute contained in an element **Element,** one may write **Element**@attribute. If an attribute's name consists of two or more combined words, camel-casing may be used after the first word, e.g. @veryImportantAttribute. Attributes may have assigned a status in the XML as mandatory (M), optional (O), optional with default value (OD) and conditionally mandatory (CM).

In DASH, all descriptor elements are structured in the same way, namely they contain a @schemeIdUri attribute that provides a URI to identify the scheme and an optional attribute @value and an optional attribute @id. The semantics of the element are specific to the scheme employed. The URI identifying the scheme may be a URN or a URL. Some descriptors are specified in MPEG-DASH (ISO/IEC 23009-1), while descriptors can additionally or alternatively be specified in other specifications. When specified in specifications other than MPEG-DASH, the MPD does not provide any specific information on how to use descriptor elements. It is up to the application or specification that employs DASH formats to instantiate the description elements with appropriate scheme information. Applications or specifications that use one of these elements define a Scheme Identifier in the form of a URI and the value space for the element when that Scheme Identifier is used.

The Scheme Identifier appears in the @schemeIdUri attribute. In the case that a simple set of enumerated values are required, a text string may be defined for each value and this string may be included in the @value attribute. If structured data is required then any extension element or attribute may be defined in a separate namespace. The @id value may be used to refer to a unique descriptor or to a group of descriptors. In the latter case, descriptors with identical values for the attribute @id may be required to be synonymous, i.e. the processing of one of the descriptors with an identical value for @id is sufficient. Two elements of type DescriptorType are *equivalent,* if the element name, the value of the @schemeIdUri and the value of the @value attribute are equivalent. If the @schemeIdUri is a URN, then equivalence may refer to lexical equivalence as defined in clause 5 of RFC 2141. If the @schemeIdUri is a URL, then equivalence may refer to equality on a character-for-character basis as defined in clause 6.2.1 of RFC3986. If the @value attribute is not present, equivalence may be determined by the equivalence for @schemeIdUri only. Attributes and element in extension namespaces might not be used for determining equivalence. The @id attribute may be ignored for equivalence determination.

MPEG-DASH specifies descriptors Essential Property and SupplementalProperty. For the element Essential Property the Media Presentation author expresses that the successful processing of the descriptor is essential to properly use the information in the parent element that contains this descriptor unless the element shares the same @id with another Essential Property element. If EssentialProperty elements share the same @id, then processing one of the EssentialProperty elements with the same value for @id is sufficient. At least one EssentialProperty element of each distinct @id value is expected to be processed. If the scheme or the value for an EssentialProperty descriptor is not recognized the DASH client is expected to ignore the parent element that contains the descriptor. Multiple Essential-Property elements with the same value for @id and with different values for @id may be present in an MPD.

For the element SupplementalProperty the Media Presentation author expresses that the descriptor contains supplemental information that may be used by the DASH client for optimized processing. If the scheme or the value for a SupplementalProperty descriptor is not recognized the DASH client is expected to ignore the descriptor. Multiple SupplementalProperty elements may be present in an MPD.

SRD (Spatial Relationship Description) is specified in the normative Annex H of MPEG-DASH. The following contains some excerpts of the SRD specification.

The SRD scheme allows Media Presentation Description authors to express spatial relationships between Spatial Objects. A Spatial Object is represented by either an Adaptation Set or a Sub-Representation. As an example, a spatial relationship may express that a video represents a spatial part of another full-frame video (e.g. a region of interest, or a tile).

The SupplementalProperty and/or Essential Property descriptors with @schemeIdUri equal to "urn:mpeg:dash:srd:2014" are used to provide spatial relationship information associated to the containing Spatial Object. SRD shall be contained exclusively in these two MPD elements (AdaptationSet and SubRepresentation).

To preserve the compatibility with legacy clients, MPD is required to use SupplementalProperty and Essential Property in such a way that at least one Representation can be interpreted by legacy clients after discarding the element containing Essential Property.

Sub-Representation level SRDs may be used to represent Spatial Objects in one Representation such as HEVC tiling streams. In that case, SRD descriptors may be present at Adaptation Set as well as Sub-Representation levels.

The @value of the SupplementalProperty or EssentialProperty elements using the SRD scheme is a comma separated list of values for SRD parameters. The SRD parameters source_id, object_x, object_y, object_width, and object_height are required to be present and the SRD parameters total_width, total_height, and spatial set_id are conditionally or optionally present.

source_id is a non-negative integer in decimal representation providing the identifier for the source of the content. The source_id parameter provides a unique identifier, within the Period, for the source of the content. It implicitly defines a coordinate system associated to this source. This coordinate system uses an arbitrary origin (0; 0); the x-axis is oriented from left to right and the y-axis from top to bottom. All SRD sharing the same source_id value have the same origin and axes orientations. Spatial relationships for Spatial Objects using SRD with different source_id values are undefined.

For a given source_id value, a reference space is defined, corresponding to the rectangular region encompassing the entire source content, whose top-left corner is at the origin of the coordinate system. The total_width and total_height values in a SRD provide the size of this reference space expressed in arbitrary units. total_width is a non-negative integer in decimal representation expressing the width of the reference space in arbitrary units. total_height is a non-negative integer in decimal representation expressing the height of the reference space in arbitrary units. It is allowed that there is no Spatial Object in the MPD that covers the entire source of the content, e.g. when the entire source content is represented by two separate videos.

object_x is a non-negative integer in decimal representation expressing the horizontal position of the top-left corner of the Spatial Object in arbitrary units. object_y is a non-negative integer in decimal representation expressing the vertical position of the top-left corner of the Spatial Object in arbitrary units. object_width is a non-negative integer in decimal representation expressing the width of the Spatial Object in arbitrary units. object_height is a non-negative integer in decimal representation expressing the height of the Spatial Object in arbitrary units. The object_x and object_y parameters (respectively object_width and object_height) express 2D positions (respectively 2D sizes) of the associated Spatial Object in the coordinate system associated to the source. The values of the object_x, object_y, object_width, and object_height parameters are relative to the values of the total_width and total_height parameters, as defined above. Positions (object_x, object_y) and sizes (object_width, object_height) of SRDs sharing the same source_id value may be compared after taking into account the size of the reference space, i.e. after the object_x and object_width values are divided by the total_width value and the object_y and object_height values divided by the total_height value of their respective descriptors. Different total_width and total_height values may be used in different descriptors to provide positions and sizes information in different units for the same reference space.

spatial set_id is a non-negative integer in decimal representation providing an identifier for a group of Spatial Objects. When not present, the Spatial Object associated to this descriptor does not belong to any spatial set and no spatial set information is given. MPD authors can express, using the spatial set_id parameter, that some Spatial Objects, within a given source_id, have a particular spatial relationship. For instance, an MPD author may group all Adaptation Sets corresponding to tiles at a same resolution level. This way, the spatial_set_id parameter may be used by the DASH client to quickly select spatially related Spatial Objects.

In DASH, an independent representation may be defined as a representation that can be processed independently of any other representations. An independent representation may be understood to comprise an independent bitstream or an independent layer of a bitstream. A dependent representation may be defined as a representation for which Segments from its complementary representations are necessary for presentation and/or decoding of the contained media content components. A dependent representation may be understood to comprise e.g. a predicted layer of a scalable bitstream. A complementary representation may be defined as a representation which complements at least one dependent representation. A complementary representation may be an independent representation or a dependent representation. Dependent Representations may be described by a **Representation** element that contains a @dependencyId attribute. Dependent Representations can be regarded as regular Representations except that they depend on a set of complementary Representations for decoding and/or presentation. The @dependencyId contains the values of the @id attribute of all the complementary Representations, i.e. Representations that are necessary to present and/or decode the media content components contained in this dependent Representation.

An Initialization Segment may be defined as a Segment containing metadata that is necessary to present the media streams encapsulated in Media Segments. In ISOBMFF based segment formats, an Initialization Segment may comprise the Movie Box ('moov') which might not include metadata for any samples, i.e. any metadata for samples is provided in 'moof' boxes.

A Media Segment contains certain duration of media data for playback at a normal speed, such duration is referred as Media Segment duration or Segment duration. The content producer or service provider may select the Segment duration according to the desired characteristics of the service. For example, a relatively short Segment duration may be used in a live service to achieve a short end-to-end latency. The reason is that Segment duration is typically a lower bound on the end-to-end latency perceived by a DASH client since a Segment is a discrete unit of generating media data for DASH. Content generation is typically done such a manner that a whole Segment of media data is made available for a server. Furthermore, many client implementations use a Segment as the unit for GET requests. Thus, in typical arrangements for live services a Segment can be requested by a DASH client only when the whole duration of Media Segment is available as well as encoded and encapsulated into a Segment. For on-demand service, different strategies of selecting Segment duration may be used.

A Segment may be further partitioned into Subsegments e.g. to enable downloading segments in multiple parts. Subsegments may be required to contain complete access units. Subsegments may be indexed by Segment Index box, which contains information to map presentation time range and byte range for each Subsegment. The Segment Index box may also describe subsegments and stream access points in the segment by signaling their durations and byte offsets. A DASH client may use the information obtained from Segment Index box(es) to make a HTTP GET request for a specific Subsegment using byte range HTTP request. If relatively long Segment duration is used, then Subsegments may be used to keep the size of HTTP responses reasonable and flexible for bitrate adaptation. The indexing information of a segment may be put in the single box at the beginning of that segment, or spread among many indexing boxes in the segment. Different methods of spreading are possible, such as hierarchical, daisy chain, and hybrid. This technique may avoid adding a large box at the beginning of the segment and therefore may prevent a possible initial download delay.

Sub-Representations are embedded in regular Representations and are described by the **Sub Representation** element. **Sub Representation** elements are contained in a **Representation** element. The **Sub Representation** element describes properties of one or several media content components that are embedded in the Representation. It may for example describe the exact properties of an embedded audio component (e.g., codec, sampling rate, etc.), an embedded sub-title (e.g., codec) or it may describe some embedded lower quality video layer (e.g. some lower frame rate, etc.). Sub-Representations and Representation share some common attributes and elements. In case the @level attribute is present in the **Sub Representation** element, the following applies:

- Sub-Representations provide the ability for accessing a lower quality version of the Representation in which they are contained. In this case, Sub-Representations for example allow extracting the audio track in a multiplexed Representation or may allow for efficient fast-forward or rewind operations if provided with lower frame rate;
- The Initialization Segment and/or the Media Segments and/or the Index Segments shall provide sufficient information such that the data can be easily accessed through HTTP partial GET requests. The details on providing such information are defined by the media format in use.
- When ISOBMFF Segments are used, the following applies:

  ◦ The Initialization Segment contains the Level Assignment box.
  ◦ The Subsegment Index box ('ssix') is present for each Subsegment.
  ◦ The attribute @level specifies the level to which the described Sub-Representation is associated to in the Subsegment Index. The information in Representation, Sub-Representation and in the Level Assignment ('leva') box contains information on the assignment of media data to levels.
  ◦ Media data should have an order such that each level provides an enhancement compared to the lower levels.

If the @level attribute is absent, then the Sub Representation element is solely used to provide a more detailed description for media streams that are embedded in the Representation.

The ISOBMFF includes the so-called level mechanism to specify subsets of the file. Levels follow the dependency hierarchy so that samples mapped to level n may depend on any samples of levels m, where m <= n, and do not depend on any samples of levels p, where p > n. For example, levels can be specified according to temporal sub-layer (e.g., temporal_id of SVC or MVC or TemporalId of HEVC). Levels may be announced in the Level Assignment ('leva') box contained in the Movie Extends ('mvex') box. Levels cannot be specified for the initial movie. When the Level Assignment box is present, it applies to all movie fragments subsequent to the initial movie. For the context of the Level Assignment box, a fraction is defined to consist of one or more Movie Fragment boxes and the associated Media Data boxes, possibly including only an initial part of the last Media Data Box. Within a fraction, data for each level appears contiguously. Data for levels within a fraction appears in increasing order of level value. All data in a fraction shall be assigned to levels. The Level Assignment box provides a mapping from features, such as scalability layers or temporal sub-layers, to levels. A feature can be specified through a track, a sub-track within a track, or a sample grouping of a track. For example, the Temporal Level sample grouping may be used to indicate a mapping of the pictures to temporal levels, which are equivalent to temporal sub-layers in HEVC. That is, HEVC pictures of a certain TemporalId value may be mapped to the a particular temporal level using the Temporal Level sample grouping (and the same can be repeated for all TemporalId values). The Level Assignment box can then refer to the Temporal Level sample grouping in the indicated mapping to levels. The Level Assignment box includes the syntax element padding_flag. padding_flag is equal to 1 indicates that a conforming fraction can be formed by concatenating any positive integer number of levels within a fraction and padding the last Media Data box by zero bytes up to the full size that is indicated in the header of the last Media Data box. For example, padding_flag can be set equal to 1 when each fraction contains two or more AVC, SVC, or MVC tracks of the same video bitstream, the samples for each track of a fraction are contiguous and in decoding order in a Media Data box, and the samples of the first AVC, SVC, or MVC level contain extractor NAL units for including the video coding NAL units from the other levels of the same fraction.

The Subsegment Index box ('ssix') provides a mapping from levels (as specified by the Level Assignment box) to byte ranges of the indexed subsegment. In other words, this box provides a compact index for how the data in a subsegment is ordered according to levels into partial subsegments. It enables a client to easily access data for partial subsegments by downloading ranges of data in the subsegment. When the Subsegment Index box is present, each byte in the subsegment is assigned to a level. If the range is not associated with any information in the level assignment, then any level that is not included in the level assignment may be used. There is 0 or 1 Subsegment Index boxes present per each Segment Index box that indexes only leaf subsegments, i.e. that only indexes subsegments but no segment indexes. A Subsegment Index box, if any, is the next box after the associated Segment Index box. A Subsegment Index box documents the subsegment that is indicated in the immediately preceding Segment Index box. Each level may be assigned to exactly one partial subsegment, i.e. byte ranges for one level are contiguous. Levels of partial subsegments are assigned by increasing numbers within a subsegment, i.e., samples of a partial subsegment may depend on any samples of preceding partial subsegments in the same subsegment, but not the other way around. For example, each partial subsegment contains samples having an identical temporal sub-layer and partial subsegments appear in increasing temporal sub-layer order within the subsegment. When a partial subsegment is accessed in this way, the final Media Data box may be incomplete, that is, less data is accessed than the length indication of the Media Data Box indicates is present. The length of the Media Data box may need adjusting, or padding may be used. The padding_flag in the Level Assignment Box indicates whether this missing data can be replaced by zeros. If not, the sample data for samples assigned to levels that are not accessed is not present, and care should be taken.

It may be required that for any dependent Representation X that depends on complementary Representation Y, the m-th Subsegment of X and the *n*-th Subsegment of Y shall be non-overlapping whenever m is not equal to *n*. It may be required that for dependent Representations the concatenation of the Initialization Segment with the sequence of Subsegments of the dependent Representations, each being preceded by the corresponding Subsegment of each of the complementary Representations in order as provided in the @dependencyId attribute shall represent a conforming Subsegment sequence conforming to the media format as specified in the @mimeType attribute for this dependent Representation.

MPEG-DASH defines segment-container formats for both ISOBMFF and MPEG-2 Transport Streams. Other specifications may specify segment formats based on other container formats. For example, a segment format based on Matroska container file format has been proposed and may be summarized as follows. When Matroska files are carried as DASH segments or alike, the association of DASH units and Matroska units may be specified as follows. A subsegment (of DASH) may be are defined as one or more consecutive Clusters of Matroska-encapsulated content. An Initialization Segment of DASH may be required to comprise the EBML header, Segment header (of Matroska), Segment Information (of Matroska) and Tracks, and may optionally comprise other level1 elements and padding. A Segment Index of DASH may comprise a Cues Element of Matroska.

DASH supports rate adaptation by dynamically requesting Media Segments from different Representations within an Adaptation Set to match varying network bandwidth. When a DASH client switches up/down Representation, coding dependencies within Representation have to be taken into account. A Representation switch may happen at a random access point (RAP), which is typically used in video coding techniques such as H.264/AVC. In DASH, a more general concept named Stream Access Point (SAP) is introduced to provide a codec-independent solution for accessing a Representation and switching between Representations. In DASH, a SAP is specified as a position in a Representation that enables playback of a media stream to be started using only the information contained in Representation data starting from that position onwards (preceded by initialising data in the Initialisation Segment, if any). Hence, Representation switching can be performed in SAP.

Several types of SAP have been specified, including the following. SAP Type 1 corresponds to what is known in some coding schemes as a "Closed GOP random access point" (in which all pictures, in decoding order, can be correctly decoded, resulting in a continuous time sequence of correctly decoded pictures with no gaps) and in addition the first picture in decoding order is also the first picture in presentation order. SAP Type 2 corresponds to what is known in some coding schemes as a "Closed GOP random access point" (in which all pictures, in decoding order, can be correctly decoded, resulting in a continuous time sequence of correctly decoded pictures with no gaps), for which the first picture in decoding order may not be the first picture in presentation order. SAP Type 3 corresponds to what is known in some coding schemes as an "Open GOP random access point", in which there may be some pictures in decoding order that cannot be correctly decoded and have presentation times less than intra-coded picture associated with the SAP.

As described above, the client or player may request Segments or Subsegments to be transmitted from different representations similarly to how the transmitted layers and/or sub-layers of a scalable video bitstream may be determined. Terms representation down-switching or bitstream down-switching may refer to requesting or transmitting a lower bitrate representation than what was requested or transmitted (respectively) previously. Terms representation up-switching or bitstream up-switching may refer to requesting or transmitting a higher bitrate representation than what was requested or transmitted (respectively) previously. Terms representation switching or bitstream switching may refer collectively to representation or bitstream up- and down-switching and may also or alternatively cover switching of representations or bitstreams of different viewpoints.

Streaming systems similar to MPEG-DASH include for example HTTP Live Streaming (a.k.a. HLS), specified in the IETF Internet Draft draft-pantos-http-live-streaming-13 (and other versions of the same Internet Draft). As a manifest format corresponding to the MPD, HLS uses an extended M3U format. M3U is a file format for multimedia playlists, originally developed for audio files. An M3U Playlist is a text file that consists of individual lines, and each line is a URI, blank, or starts with the character '#' indicating a tag or a comment. A URI line identifies a media segment or a Playlist file. Tags begin with #EXT. The HLS specification specifies a number of tags, which may be regarded as key-value pairs. The value part of tags may comprise an attribute list, which is a comma-separated list of attribute-value pairs, where an attribute-value pair may be considered to have the syntax AttributeName=AttributeValue. Hence, tags of HLS M3U8 files may be considered similar to Elements in MPD or XML, and attributes of HLS M3U8 files may be considered similar to Attributes in MPD or XML. Media segments in HLS are formatted according to the MPEG-2 Transport Stream and contain a single MPEG-2 Program. Each media segment is recommended to start with a Program Association Table (PAT) and a Program Map Table (PMT).

An end-to-end DASH system may be comprised as follows. The media content is provided by an origin server, which is typically a conventional web (HTTP) server. The origin server may be connected with a Content Delivery Network (CDN) over which the streamed content is delivered to and stored in edge servers. The MPD allows signaling of multiple base URLs for the content, which can be used to announce the availability of the content in different edge servers. Alternatively, the content server may be directly connected to the Internet. Web proxies may reside on the path of routing the HTTP traffic between the DASH clients and the origin or edge server from which the content is requested. Web proxies may cache HTTP messages and hence can serve clients' requests with the cached content. They are commonly used by network service providers, since they reduce the required network bandwidth from the proxy towards origin or edge servers. For end-users HTTP caching provides shorter latency. DASH clients may be connected to the Internet through an access network, such as a mobile cellular network.

In DASH the automated selection between Representations in the same Adaptation Set have been performed based on the width and height (@width and @height); the frame rate (@frameRate); the bitrate (@bandwidth); indicated quality ordering between the Representations (@qualityRanking). The semantics of @qualityRanking are specified as follows: specifies a quality ranking of the Representation relative to other Representations in the same Adaptation Set. Lower values represent higher quality content. If not present, then no ranking is defined.

In virtual reality (VR) video content, parts of the 360-degree content ("the viewport") may be represented by better quality while other parts may be represented by lower quality. None of the attributes above is sufficient to make a distinction between 360-degree video where coded for different primary viewport.

Generally, the present embodiments relate to a streaming manifest, such as an MPD of DASH, that comprises indicating in the manifest a viewport or a spatial region; and indicating in the manifest at least one value indicative of a quality of the viewport or the spatial region.

An apparatus is configured, according to an embodiment, to determine a viewport or a spatial region within an encoded bitstream, to include in a manifest the viewport or the spatial region of an encoded bitstream, and to determine and include in the manifest at least one value indicative of the quality of the viewport or the spatial region.

A client apparatus is configured, according to an embodiment, to parse from a manifest a viewport or a spatial region; to parse from the manifest at least one value indicative of the quality of the viewport or the spatial region; to determine that the viewport or the spatial region is suitable for displaying; and to select from the manifest a representation based on the at least one value indicative of the quality of the viewport or the spatial region.

It needs to be understood that instead of or in addition to a manifest, embodiments similarly apply to a container file format and/or a media bitstream. For example, instead of or in addition to indicating a viewport or a spatial in a manifest and at least one value indicative of the quality of the viewport or the spatial region in a manifest, they can be indicated within metadata of a container file format that also contains or refers to the encoded bitstream.

It needs to be understood that while many embodiments are described using singular forms of nouns, e.g. an encoded bitstream, a viewport, a spatial region, and so on, the embodiments generally apply to plural forms of nouns.

In an embodiment, a client apparatus is configured, according to an embodiment, to parse from a manifest information of a first Representation and a second Representation, to parse from the manifest a viewport or a spatial region for each of the first Representation and the second Representation; and to parse from the manifest a first value indicative of the quality of the viewport or the spatial region in the first Representation and a second value indicative of the quality of the viewport or the spatial region in the second Representation. The client apparatus determines that the viewport or the spatial region is suitable for displaying. For example, the client apparatus may include means to detect head orientation when using a head-mounted display and determine that the viewport or the spatial region matches the head orientation. The client apparatus selects the first Representation or the second Representation based on the first and second value indicative of the quality of the viewport or the spatial region. As a consequence of the selection, the client apparatus may request (Sub)Segments of the selected Representation.

In an embodiment, a client apparatus is configured, according to an embodiment, to parse from a manifest information of a first Representation and a second Representation, to parse from the manifest a first viewport or a first spatial region for the first Representation, and a second viewport or a second spatial region for the second Representation. The client apparatus determines that the first viewport or the first spatial region is suitable for displaying or that second viewport or the second spatial region is suitable for displaying and selects the first or second Representation accordingly. For example, the client apparatus may include means to detect head orientation when using a head-mounted display and determine that the first viewport or the first spatial region matches the head orientation. As a consequence of the selection, the client apparatus may request (Sub)Segments of the selected Representation. If there is more than one Representation suitable for displaying, the client apparatus may parse from the manifest values indicative of the quality of the selected viewport or the selected spatial region in the more than one Representation and select among them the Representation with indicated best quality.

The present embodiments are discussed in more detailed manner in the following.

In an embodiment, a VR projection format (e.g. an equirectangular panorama or a cube map) is indicated in a manifest or parsed from a manifest. The VR projection format may be indicated in the manifest or parsed from the manifest or inferred to be specific to a viewport or a spatial region or an entire picture. When frame packing is in use, the VR projection format may be inferred to apply to the constituent frames of the pictures that the decoder outputs. The VR projection format may, for example, use the following semantics or alike:

Type: unsigned integer, enumeration

Range: 0 - 255

| Value | Semantics |
|-------|-----------|
| 0 | Equirectangular |
| 1 | Cube map |
| 2-254 | Reserved |
| 255 | Other / unknown |

## 1. Viewport-based signaling

In an embodiment, it is indicated in a manifest or parsed from a manifest whether the viewport is monoscopic, left or right view of stereoscopic content, or contains both of views of stereoscopic content. The indication included in a manifest or parsed from a manifest may, for example, use the following semantics or alike:

Type: unsigned integer, enumeration
Range: 0 - 15

| Value | Semantics |
|---|---|
| 0 | Monoscopic |
| 1 | Left view of stereoscopic content |
| 2 | Right view of stereoscopic content |
| 3 | Both views of stereoscopic content |
| 4-14 | Reserved |
| 15 | Other / unknown |

In an embodiment, the viewport is indicated in a manifest or parsed from a manifest with reference to spherical coordinates indicating the position and, in some embodiments, the orientation, of the viewport on a sphere.

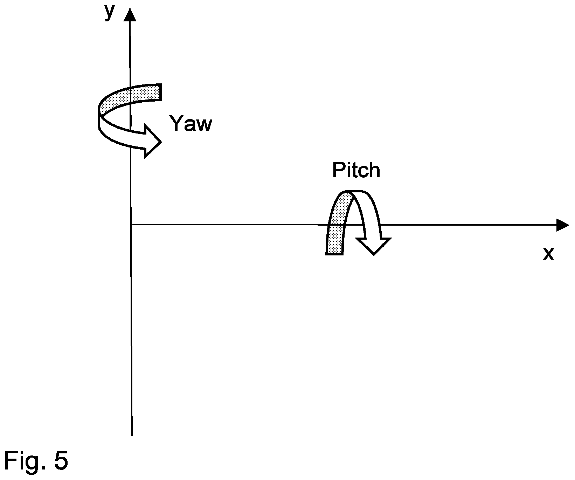

In an embodiment, the position of the viewport on a sphere is indicated using two angles of a spherical coordinate system indicating a specific point of the viewport, such as the center point or a particular corner point of the viewport. The specific point may be pre-defined, e.g. in a manifest format specification, or may be indicated in a manifest and/or parsed from a manifest. For example, Yaw and Pitch angles may be used, where Yaw indicates the Euler angle of the center point of the viewport, e.g. in degrees, relative to the reference orientation, and Pitch indicates the Euler angle of the center point of the viewport, e.g. in degrees, applied in the order Yaw followed by Pitch, relative to the reference orientation. Yaw is applied prior to Pitch. Yaw rotates around the one coordinate axis (e.g. Y-axis), Pitch around another axis (e.g. the X-axis). The angles may be defined to increase clockwise when looking away from the origin. Yaw may be defined to be in the range of 0, inclusive, to 360 exclusive; Pitch may be defined to be in the range of -90 to 90, inclusive The relation of Yaw and Pitch to a coordinate system specifying a reference orientation is informatively illustrated in Figure 5.

In an embodiment, the orientation of a viewport is pre-defined, e.g. in a manner that it is a function of the angles indicating the position of the viewport. In another embodiment, the orientation of a viewport is indicated in a manifest and/or parsed from a manifest. For example, a Roll angle indicating a rotation along a third coordinate axis (orthogonal to those coordinate axes around which Yaw and Pitch rotate) may be indicated in a manifest and/or parsed from a manifest, indicating the rotation angle of the viewport. In another example, rotation angle is pre-defined to be such that the horizontal axis of the viewport is parallel to an axis in the spherical coordinate system.

In an embodiment, the shape and/or size of the viewport are pre-defined. For example, it may be pre-defined that the shape of a viewport of a cube map is a square and the size is 90 degrees in horizontal and vertical field of view. In an embodiment, the shape and/or size of the viewport are indicated in a manifest and/or parsed from a manifest. For example, the manifest may include HorFov and VerFov values, where HorFov indicates the horizontal field of view of the viewport, e.g. in degrees, and VerFov indicates the vertical field of view of the viewport, e.g. in degrees.

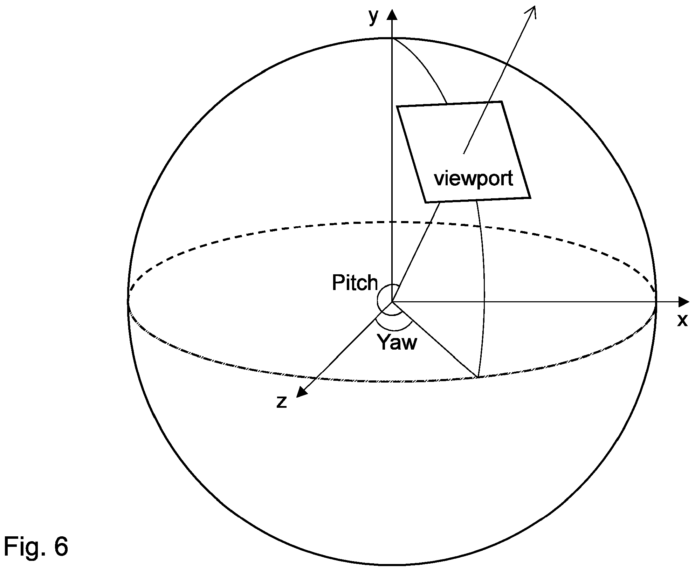

Figure 6 illustrates one possible selection of a viewport and one possible definition of Yaw and Pitch angles for the viewport.

In an embodiment, a quality ranking for a viewport is included in a manifest and/or parsed from a manifest. The quality ranking may indicate the order of picture or video quality among all viewports and entire video representations that are associated with the same observation point or alike.

In an embodiment, a quality value for a viewport is included in a manifest and/or parsed from a manifest. The quality value may represent picture or video quality. For example, an average peak signal to noise ratio (PSNR) or the structured similarity measure (SSIM) may be used as a quality value.

In an embodiment, a viewport is indicated in and/or parsed from a DASH MPD.

If the viewport is indicated in an Adaptation Set level, it applies to all Representations of the Adaptation Set. If the viewport is indicated in a Representation level, it applies to that Representation. If the viewport is indicated in a Sub-Representation level, it applies to that Sub-Representation.

In an embodiment, a new element is defined into DASH MPD schema for the viewport, below referred to as a VirtualRealityVideo element (but any other name could alternatively be used). In another embodiment, a scheme for essential and/or supplemental property descriptor is defined for a viewport. The following paragraphs provide exemplary further details for these embodiments.

The VirtualRealityVideo element is optionally (N times) present in the common attributes and elements for AdaptationSet, Representation, and Sub Representation. VirtualRealityVideo includes code points as proposed above. For frame-packed content, more than one VirtualRealityVideo element may be present. The semantics of VirtualRealityVideo element may be defined for example as follows:

| Element or Attribute Name | Use | Description |
|---|---|---|
| VirtualRealityVideo | | |
| @id | M | VirtualRealityVideo@id shall be identical in all virtualRealityvideo elements of an Adaptation Set. VirtualRealityVideo@id in one Adaptation Set that is equal to VirtualRealityVideo@id in another Adaptation Set indicates that the two Adaptation Sets represent the same virtual reality content. |
| @projectionFormat | M | specifies the projection format of the viewport, as specified above. |
| @multiview | M | specifies the multiview format of the viewport, as specified above. |
| Viewport | CM | specifies the viewport direction and field of view. viewport shall be present unless the virtualRealityvideo element is the last virtualRealityvideo element of the containing element, and otherwise may be present. When not present, the viewport covers the viewports not covered in the earlier virtualRealityvideo elements in the same containing element. |
| @qualityRanking | O | when present in a virtualRealityvideo element, @qualityRanking shall not be present outside the VirtualRealityVideo element for the same associated Representation or Sub-Representation. @qualityRanking specifies a quality ranking of the viewport relative to other Representations and viewports with the same VirtualRealityVideo@id. Lower values represent higher quality content. If not present then no ranking is defined. |
| Legend: For attributes: M=Mandatory, O=Optional, OD=Optional with Default Value, CM=Conditionally Mandatory. For elements: \<minOccurs>...\<maxOccurs> (N=unbounded) Elements are **bold**; attributes are non-bold and preceded with an @, List of elements and attributes is in *italics bold* referring to those taken from the Base type that has been extended by this type. | | |

The semantics of Viewport element may be defined for example as follows:

| Element or Attribute Name | Use | Description |
|---|---|---|
| Viewport | | |
| @yaw | M | as specified above. |
| @pitch | M | as specified above. |
| @horFov | M | as specified above. |
| @verFov | M | as specified above. |
| Legend: For attributes: M=Mandatory, O=Optional, OD=Optional with Default Value, CM=Conditionally Mandatory. For elements: \<minOccurs>...\<maxOccurs> (N=unbounded) Elements are **bold**; attributes are non-bold and preceded with an @, List of elements and attributes is in *italics bold* referring to those taken from the Base type that has been extended by this type. | | |

In an example embodiment, the virtual reality property descriptor (VRD) scheme allows Media Presentation Description authors to express:

- The viewport(s) represented by the content
- The projection format for the viewport(s)
- Whether content for the viewport(s) is monoscopic or stereoscopic, and in the case of stereoscopic content if the left or right or both views are present
- A quality ranking value for the viewport(s) enabling clients to make a distinction between Representations and Sub-Representations representing the same viewport(s) but with different qualities

The VRD scheme uses **SupplementalProperty** and/or **EssentialProperty** descriptors with a particular value of @schemeIdUri. An **EssentialProperty** descriptor may be used, when displaying the decoded video content on a conventional two-dimensional display without further display processing is undesirable.

More than one VR **SupplementalProperty** or **EssentialProperty** descriptor may be present in the same containing element. Each VR **SupplementalProperty** or **EssentialProperty** descriptor indicates the characteristics of one viewport. When more than one VR **SupplementalProperty** or **EssentialProperty** descriptor is present in the same containing element, all of them may be constrained to be either **SupplementalProperty** descriptors or **EssentialProperty** descriptors.

In an example embodiment, the @value of the **SupplementalProperty** or **EssentialProperty** elements using the VRD scheme is a comma separated list of values for VRD parameters specified in the following table:

| EssentialProperty@ value or SupplementalProper ty@value parameter | Use | Description |
|---|---|---|
| vr_source_id | M | non-negative integer in decimal representation providing the identifier for the source of the content |
| view_idc | M | 0 indicates that the viewport is monoscopic, 1 indicates that the viewport is the left view of stereoscopic content, 2 indicates that the viewport is the right view of stereoscopic content, 3 indicates that the viewport contains both the left and right views. Other values are reserved. |
| projection_format | M | specifies the projection format of the viewport, as specified above |
| viewport_yaw | M | decimal floating point value as specified above or string "NA" indicating that the viewport covers the remaining field of view not covered by the other VRD **SupplementalProperty** or **EssentialProperty** elements in the same containing element. |
| viewport_pitch | M | decimal floating point value as specified above or string "NA". When viewport_yaw is equal to NA, viewport_pitch is also equal to NA. |
| viewport_hor_fov | M | decimal floating point value as specified above or string "NA". When viewport_yaw is equal to NA, viewport_hor_fov is also equal to NA. |
| viewport_ver_fov | M | decimal floating point value as specified above or string "NA". When viewport yaw is equal to NA, viewport_ver_fov is also equal to NA. |
| quality_ranking | O | specifies a quality ranking of the viewport relative to other Representations (with associated @qualityRanking) in the same Adaptation Set and viewports with the same vr_source_id value in any Adaptation Set. Lower values represent higher quality content. If not present then no ranking is defined. |
| Legend: M=Mandatory, O=Optional | | |

In the following, some illustrative examples of the VRD EssentialProperty XML code lines are given. A @schemeIdUri equal to "urn:mpeg:omaf:vrd:2017" is assumed below but any other particular value could likewise be used. It needs to be understood that examples could be similarly authored for other similar VRD syntax and semantics, and for the VirtualRealityVideo element or alike.

Monoscopic equirectangular panorama can be indicated with the following:

```
<EssentialProperty schemeIdUri="urn:mpeg:omaf:vrd:2017" value="0,0,0,0,0,360,180"/>
```

Stereoscopic equirectangular panorama can be indicated with the following:

```
<EssentialProperty schemeIdUri = "urn:mpeg:omaf:vrd:2017" value = "0,3, 0, 0, 0,360, 180"/>
```

Assuming that top-bottom frame packing (left view on top) is used for carrying the views of the stereoscopic panorama, the following can additionally be used to indicate the location of the constituent frames and the association of left and right views to the constituent frames:

```
<EssentialProperty schemeIdUri="urn:mpeg:mpegB:cicp:VideoFramePackingType" value="4"/>

<EssentialProperty          schemeIdUri="urn:mpeg:mpegB:cicp:PackedContentInterpretationType"

value="1"/>
```

Monoscopic cube map with all six cube faces can be indicated with the following:

```
<EssentialProperty schemeIdUri="urn:mpeg:omaf:vrd:2017" value="0,0,1,NA,NA,NA,NA"/>
```

In the following, several Representations of stereoscopic equirectangular panorama projection format are prepared each view a different primary viewport with horizontal and vertical field of view of 120 degrees, separated by 30 degrees apart horizontally and located at the equator. This results into 12 Representations having Yaw equal to (0, 30, 60, 90, 120, 150, 180, 210, 240, 270, 300, 330). It is assumed that the primary viewport has quality ranking 1 and the remaining areas in the equirectangular panorama have quality ranking 9 (but naturally any other arbitrary values could be used instead). All the Representations are included in the same Adaptation Set.

Representation #1

```
<EssentialProperty schemeIdUri="urn:mpeg:omaf:vrd:2017" value="0,3,0,0,0,120,120,1"/>
<EssentialProperty schemeIdUri="urn:mpeg:omaf:vrd:2017" value="0,3,0,NA,NA,NA,NA,9"/>
```

Representation #2

```
<EssentialProperty schemeIdUri="urn:mpeg:omaf:vrd:2017" value="0,3,0,30,0,120,120,1"/>
<EssentialProperty schemeIdUri="urn:mpeg:omaf:vrd:2017" value="0,3,0,NA,NA,NA,NA,9"/>
```

Representation #3

```
<EssentialProperty schemeIdUri="urn:mpeg:omaf:vrd:2017" value="0,3,0,60,0,120,120,1"/>
<EssentialProperty schemeIdUri="urn:mpeg:omaf:vrd:2017" value="0,3,0,NA,NA,NA,NA,9"/>
```

Representation #12

```
<EssentialProperty schemeIdUri = "urn:mpeg:omaf:vrd:2017" value="0,3,0,330,0,120,120,1"/>
<EssentialProperty schemeIdUri="urn:mpeg:omaf:vrd:2017" value="0,3,0,NA,NA,NA,NA,9"/>
```

In an embodiment, a client parses an MPD including an Adaptation Set with VRD information as described above or alike. The client determines the viewport or the spatial region is suitable for displaying. The client selects the Representation that has the highest indicated quality for the viewport or the spatial region suitable for displaying based on the VRD.

In the following, several Representations representing a hemisphere of monoscopic equirectangular panorama projection format, each having 180-degree horizontal and vertical field of view. All the Representations are included in different Adaptation Sets. The Adaptation Sets are 90 degrees apart horizontally. It is assumed each Adaptation Set offers two Representations of different quality, for which either the quality_ranking value within the proposed descriptor is used.

AdaptationSet #1

Representation #1a:

```
<EssentialProperty schemeIdUri="urn:mpeg:omaf:vrd:2017" value="0,0,0,0,0,180,180,1"/>
```

Representation #1b:

```
<EssentialProperty schemeIdUri="urn:mpeg:omaf:vrd:2017" value="0,0,0,0,0,180,180,9"/>
```

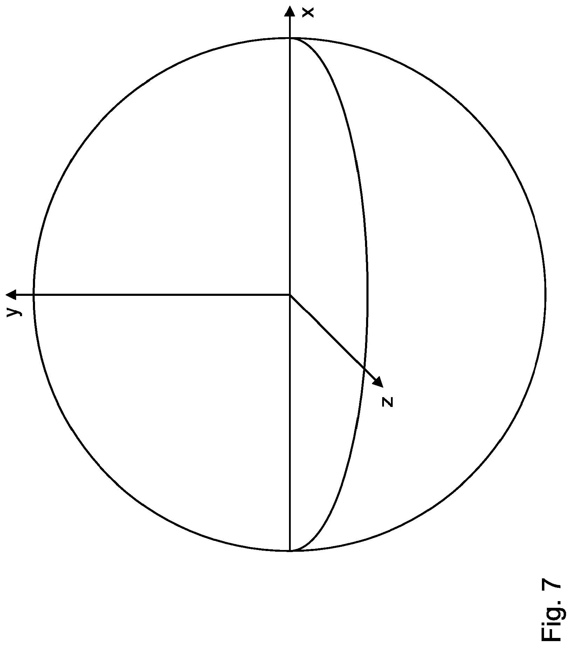

The viewport covered by AdaptationSet #1 can be illustrated as indicated in Figure 7.

AdaptationSet #2

Representation #2a:

```
<EssentialProperty schemeIdUri="urn:mpeg:omaf:vrd:2017" value="0,0,0,90,0,180,180,1"/>
```

Representation #2b:

```
<EssentialProperty schemeIdUri="urn:mpeg:omaf:vrd:2017" value="0,0,0,90,0,180,180,9"/>
```

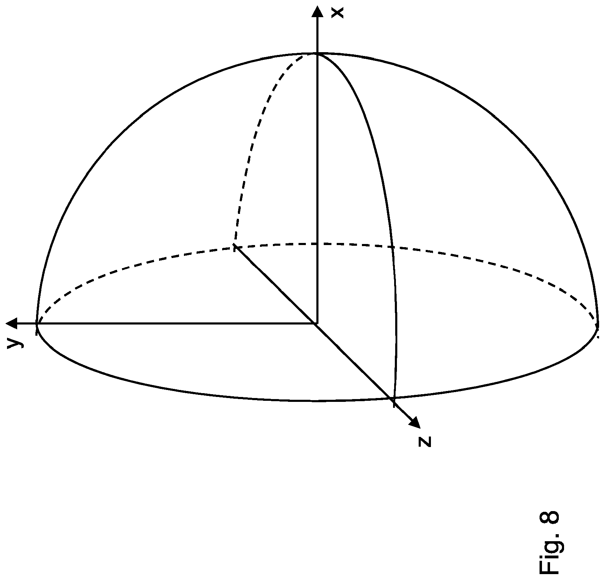

The viewport covered by AdaptationSet #2 can be illustrated as indicated in Figure 8.

AdaptationSet #3

Representation #3a:

```
<EssentialProperty schemeIdUri="urn:mpeg:omaf:vrd:2017" value="0,0,0,180,0,180,180,1"/>
```

Representation #3b:

```
<EssentialProperty schemeIdUri="urn:mpeg:omaf:vrd:2017" value="0,0,0,180,0,180,180,9"/>
```

AdaptationSet #4

Representation #4a:

```
<EssentialProperty schemeIdUri = "urn:mpeg:omaf:vrd:2017" value="0,0,0,270,0,180,180,1"/>
```

Representation #4b:

```
<EssentialProperty schemeIdUri = "urn:mpeg:omaf:vrd:2017" value="0,0,0,270,0,180,180,9"/>
```

In an embodiment, a client parses an MPD including Adaptation Sets with VRD information as described above or alike. The client determines the viewport or the spatial region is suitable for displaying. The client selects a first Adaptation Set that matches the viewport or the spatial region that is suitable for displaying. The client selects, from the first Adaptation Set, the Representation that has the highest indicated quality. The client may additionally select Adaptation Set(s) that complement the first Adaptation Set so that by combining content of all selected Adaptation Sets, an entire 360-degree or omnidirectional visual content is obtained. The client may select, from each additional Adaptation Set(s), a Representation that has a lower quality than the highest indicated quality and hence allocate a smaller bit rate share for Representation(s) that are not suitable for displaying.

## 2. Spatial region based signaling

In an embodiment, a spatial region is included in a manifest and/or parsed from a manifest as a position, width, and height of a rectangle defining the spatial region. The position may be for example the position of the top-left corner of the rectangle within a picture that is output by decoding.

In an embodiment, a spatial region is included in a manifest and/or parsed from a manifest as two positions of opposite corners of a rectangle defining the spatial region. The positions may be for example the position of the top-left and bottom-right corners of the rectangle within a picture that is output by decoding.

In an embodiment, a quality ranking for a spatial region is included in a manifest and/or parsed from a manifest. The quality ranking may indicate the order of picture or video quality among all viewports and entire video representations that are associated with the same observation point or alike.

In an embodiment, a quality value for a spatial region is included in a manifest and/or parsed from a manifest. The quality value may represent picture or video quality. For example, an average peak signal to noise ratio (PSNR) or the structured similarity measure (SSIM) may be used as a quality value.

In an embodiment, a new element is defined into DASH MPD schema for the specifying a spatial region. In another embodiment, a scheme for essential and/or supplemental property descriptor is defined for a spatial region. The following paragraphs provide exemplary further details for the latter embodiment, while example embodiments could be similarly realized for the former embodiment.

A supplemental property descriptor with a particular @schemeIdUri is specified (e.g. "urn:mpeg:dash:srq:2017"). Multiple property descriptors with the same @schemeIdUri value may be present. Each property descriptor indicates a viewport as a spatial region (e.g. a spatial region within an equirectangular panorama). A quality ranking value is provided for the spatial region.

In an embodiment, source_id is specified identically to that for the spatial relationship descriptor DASH and uses the same identifier space as source_id of the spatial relationship descriptor. When a spatial relationship descriptor is used, the units for specifying the viewport position and size are the same as those used for the spatial relationship descriptor.

| EssentialProperty@value or SupplementalProperty@value parameter | Use | Description |
|---|---|---|
| source_id | M | non-negative integer in decimal representation providing the identifier for the source of the content |
| quality_ranking | M | specifies a quality ranking of the viewport relative to other Representations (with associated @qualityRanking) and viewports in the same Adaptation Set. Lower values represent higher quality content. If not present then no ranking is defined. |
| viewport_x | O | non-negative integer in decimal representation expressing the horizontal position of the top-left corner of the viewport in arbitrary units |

(continued)

| EssentialProperty@value or SupplementalProperty@value parameter | Use | Description |
|---|---|---|
| viewport_y | O | non-negative integer in decimal representation expressing the vertical position of the top-left corner of the viewport in arbitrary units |
| viewport width | O | non-negative integer in decimal representation expressing the width of the viewport in arbitrary units |
| viewport_height | O | non-negative integer in decimal representation expressing the height of the viewport in arbitrary units |
| total_width | O | optional non-negative integer in decimal representation expressing the width of the reference space in arbitrary units. At each Period and for a given source_id value, the following rules apply: <br> - There shall be at least one descriptor providing a value for the total_width parameter. <br> - If two or more descriptors provide different total_ width values, all other descriptors shall explicitly provide the value of totalwidth. <br> - If the total_width value is provided in only one spatial relationship descriptor or virtual reality video descriptor, all other descriptors are assumed to use that totalwidth value. <br> - The value of total_width shall be such that, for each descriptor using this value of total_width, the sum of viewport_x and viewport_width is smaller or equal to total_ width. <br> When the value total_width is present, the value total height shall be present. |
| total_height | O | optional non-negative integer in decimal representation expressing the height of the reference space in arbitrary units. At each Period and for a given source_id value, the following rules apply: <br> - There shall be at least one descriptor providing a value for the total_height parameter. <br> - If two or more descriptors provide different total_ height values, all other descriptors shall explicitly provide the value of total_height. <br> - If the total_height value is provided in only one spatial relationship descriptor or virtual reality video descriptor, all other descriptors are assumed to use that total_height value. <br> - The value of total_height shall be such that, for each descriptor using this value of total_height, the sum of viewport_y and viewport_height is smaller or equal to total_ height. |
| **Legend:** M=Mandatory, O=Optional | | |

viewport_x, viewport_y, viewport_width, viewport_height are optionally present in the last property descriptor for a Representation and are (unconditionally) present otherwise.

This signaling may be complemented by a projection format and multiview signaling, for example as proposed above. Consequently, a player is able to conclude a VR viewport from the spatial region, projection format, and multiview signaling. For example, a player may conclude approximations of a yaw, pitch, horizontal field of view, and vertical field on view from the spatial position, width, and height indicated with the property descriptor. It is noted that in many projection formats, the spatial region does not correspond to a rectangular viewport - hence, concluded horizontal and vertical fields of view may for example represent a minimum or an average.

According to an example, an adaptation set that contains monoscopic equirectangular Representations may contain (in pseudo-code) the following Representations and spatial region based viewport signaling:

```
AdaptationSet {
    Representation { // quality class 1 (highest) for the left side of the panorama,
class 100 (lowest) otherwise
    EssentialProperty {@schemeldUri="urn:mpeg:dash:srq:2017"@value="1, 1, 0, 0,
    180, 180, 360, 180"}
    EssentialProperty {@schemeldUri="urn:mpeg:dash:srq:2017"@value="1, 100"}
    }
    Representation { // quality class 1 for the right side of the panorama, class 100
    otherwise
    EssentialProperty {@schemeldUri="urn:mpeg:dash:srq:2017"@value="1, 1, 180,
    0, 180, 180"}
    EssentialProperty {@schemeldUri="urn:mpeg:dash:srq:2017"@value="1, 100"}
    }
    Representation {// constant quality class 50 for the entire panorama
    @qualityRanking=50: }
```

In an embodiment, which may be used independently of or in addition to other embodiments, an Adaptation Set or a Sub-Representation represents a single spatial region that has a spatial relationship to another Adaptation Set or to another Sub-Representation. In this case, the SRD scheme may be used. Additionally at least one value indicative of a quality of the spatial region may be indicated, for which embodiments described above in Section 2 (Spatial region based signaling) may be used. Alternatively or additionally, in an embodiment, the SRD scheme is appended with at least one value indicative of the quality among all viewports, Sub-Representations, and Representations that are associated with the same observation point or alike (e.g. through the source_id value or alike). For example, quality_ranking as described above may be included in the SRD scheme. In an embodiment the at least one value indicative of the quality is appended at the end of the list included in @value without a change in the @schemeldUri, while in another embodiment @schemeldUri is updated, which allows adding the at least one value indicative of the quality at any position in the sequence of items in the list included in @value. In an embodiment, the at least one value indicative of the quality is included in an SRD. In an embodiment, the at least one value indicative of the quality is parsed from an SRD.

As mentioned earlier, instead of or in addition to a manifest, embodiments similarly apply to a container file format and/or a media bitstream. More details on such embodiments are described in the following.

In an embodiment, an apparatus is configured to determine a viewport or a spatial region within an encoded bitstream, to include in a container file the viewport or the spatial region of an encoded bitstream, and to determine and include in the container file at least one value indicative of the quality of the viewport or the spatial region.

A player apparatus is configured, according to an embodiment, to parse from a container file a viewport or a spatial region; to parse from the container file at least one value indicative of the quality of the viewport or the spatial region; to determine that the viewport or the spatial region is suitable for displaying; and to select from the container file a track based on the at least one value indicative of the quality of the viewport or the spatial region.

In an embodiment, the viewport or the spatial region and/or the at least one value indicative of the quality of the viewport or the spatial region may be indicated in and/or parsed from a container file that conforms to the ISO base media file format. For example one or more of the following structures of the ISO base media file format may be used for containing the mentioned information:

- A new box in the sample entry of a track encapsulating a media bitstream.
- A new box in a restricted video sample entry ('resv') of a track encapsulating a media bitstream.
- A sample group, where sample group description entries can indicate the viewport or the spatial region and/or the at least one value indicative of the quality of the viewport or the spatial region.
- A timed metadata track, where samples indicate the viewport or the spatial region and/or the at least one value indicative of the quality of the viewport or the spatial region.

In an embodiment, an apparatus is configured to determine a viewport or a spatial region within an encoded bitstream on the basis of indications provided in a container file encapsulating the encoded bitstream, to include in a manifest the viewport or the spatial region of an encoded bitstream, to determine on the basis of indications provided in the container file at least one value indicative of the quality of the viewport or the spatial region, and to include the at least one value indicative of the quality of the viewport or the spatial region into the manifest.

In an embodiment, an apparatus encodes a video bitstream with a viewport or a spatial region that has a quality better than another viewport or another spatial region in the bitstream, encodes into the video bitstream an indication of the viewport or the spatial region and encodes into the video bitstream at least one value indicative of the quality of the viewport or the spatial region.

In an embodiment, an indication of the viewport or the spatial region is encoded as a part of VUI or into an SEI message, and the at least one value indicative of the quality of the viewport or the spatial region is encoded into the VUI or the SEI message.

A video decoder is configured, according to an embodiment, to parse from a video bitstream, such as from VUI or from an SEI message, a viewport or a spatial region; to parse from the video bitstream, such as from VUI or from the SEI message, at least one value indicative of the quality of the viewport or the spatial region; to determine that the viewport or the spatial region is suitable for displaying; and to decode the video bitstream or at least the part of the bitstream representing the viewport or the spatial region based on the at least one value indicative of the quality of the viewport or the spatial region.

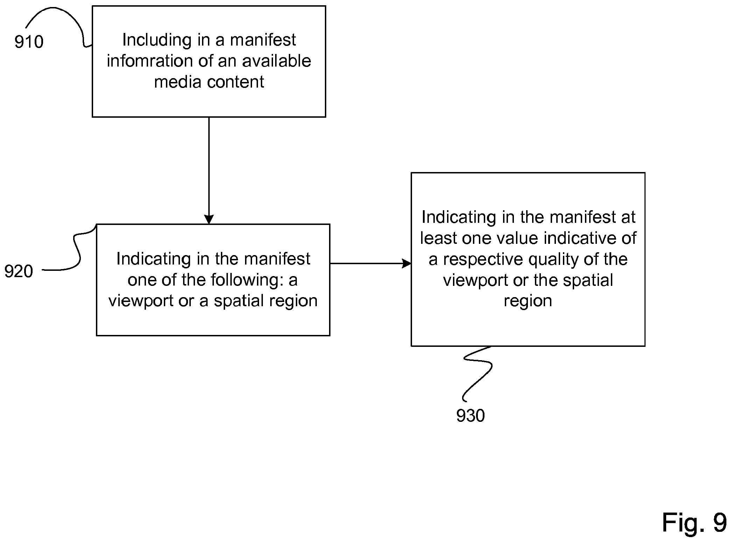

Figure 9 is a flowchart illustrating a method according to an embodiment. A method comprises including in a manifest information of an available media content 910; indicating in the manifest one of the following: a viewport or a spatial region 920; and indicating in the manifest at least one value indicative of a respective quality of the viewport or the spatial region 930.

An apparatus according to an embodiment comprises means for including in a manifest information of an available media content; means for indicating in the manifest one of the following: a viewport or a spatial region; and means for indicating in the manifest at least one value indicative of a respective quality of the viewport or the spatial region. These means may comprise a processor, a memory, and a computer program code residing in the memory.

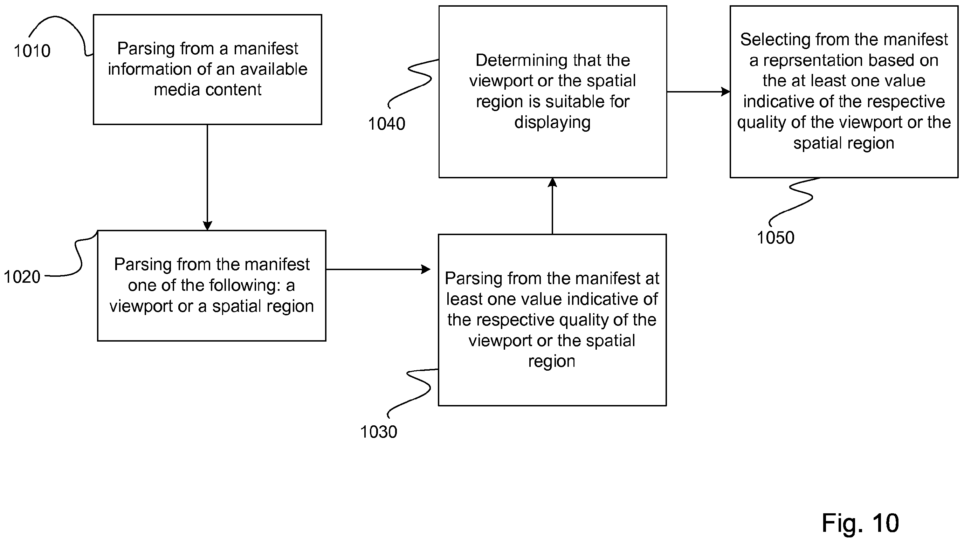

Figure 10 is a flowchart illustrating a method according to another embodiment. A method comprises parsing from a manifest information of an available media content 1010; parsing from the manifest one of the following: a viewport or a spatial region 1020; parsing from the manifest at least one value indicative of the respective quality of the viewport or the spatial region 1030; determining that the viewport or the spatial region is suitable for displaying 1040; and selecting from the manifest a representation based on the at least one value indicative of the respective quality of the viewport or the spatial region 1050.

An apparatus according to another embodiment comprises means for parsing from a manifest information of an available media content; means for parsing from the manifest one of the following: a viewport or a spatial region; means for parsing from the manifest at least one value indicative of the respective quality of the viewport or the spatial region; means for determining that the viewport or the spatial region is suitable for displaying; and means for selecting from the manifest a representation based on the at least one value indicative of the respective quality of the viewport or the spatial region. These means may comprise a processor, a memory, and a computer program code residing in the memory.

An apparatus according to an embodiment comprises means for including in a manifest information of an available media content; indicating in the manifest one of the following: a viewport or a spatial region; and indicating in the manifest at least one value indicative of a respective quality of the viewport or the spatial region.

The means may comprise a processor, a memory, and a computer program code residing in the memory.

An apparatus according to another embodiment comprises means for parsing from a manifest information of an available media content; parsing from the manifest one of the following: a viewport or a spatial region; parsing from the manifest at least one value indicative of the respective quality of the viewport or the spatial region; determining that the viewport or the spatial region is suitable for displaying; and selecting from the manifest a representation based on the at least one value indicative of the respective quality of the viewport or the spatial region.

The means may comprise a processor, a memory, and a computer program code residing in the memory.

The various embodiments may provide advantages. The present embodiments enable viewport-adaptive virtual reality video streaming.

In the above, some embodiments have been described for quality-based Representation selection. It needs to be understood that other factors, such as bitrate and spatial resolution, of the Representation may also affect the Representation switching. In general a set of available Representations that are available for streaming may be pruned in a manner that Representations with too high bitrate (e.g. for the prevailing network throughput) and/or too high spatial resolution and/or picture rate (e.g. for decoding capacity) may be excluded from the set among which the Representation can be selected.

In the above, some embodiments have been described in relation to ISOBMFF and/or formats derived from ISOBMFF. It needs to be understood that embodiments similarly apply to other file and segment formats, such as the Matroska file format.

In the above, some embodiments have been described in relation to MPEG-DASH or DASH. It needs to be understood that embodiments similarly apply to other forms of streaming over HTTP, such as the Apple HTTP Live Streaming (HLS).

In the above, some embodiments have been described by referring to the term streaming. It needs to be understood that embodiments similarly apply to other forms of video transmission, such as progressive downloading, file delivery, and conversational video communications, such as video telephone.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with other. Furthermore, if desired, one or more of the above-described functions and embodiments may be optional or may be combined.

While the disclosure has been shown and described with reference to various embodiments thereof, it will be understood by those skilled in the art that various changes in form and details may be made therein without departing from the scope of the disclosure as defined by the appended claims.

## Claims

1. An apparatus comprising at least one processor and at least one memory, said at least one memory stored with code thereon, which when executed by said at least one processor, causes the apparatus to:

   - include, in a container file conforming to an ISO base media file format, a timed metadata track referring to an available media content being 360-degree video;
   - include, in the container file, at least one sample of the timed metadata track and
   - include, in the at least one sample of the timed metadata track, a viewport, wherein the viewport is a part of the 360-degree video represented by the media track; and
   - indicate, in the at least one sample of the timed metadata track, at least one value indicative of a quality of the viewport.

2. The apparatus according to claim 1, wherein the viewport is indicated in the at least one sample of the timed metadata track with a horizontal field of view of the viewport, a vertical field of view of the viewport, and a position of the viewport, wherein the position is indicated with two angles on a spherical coordinate system indicating a center point of the viewport.

3. The apparatus according to claim 2, wherein the viewport is additionally indicated in the at least one sample of the timed metadata track with an orientation of the viewport, wherein the orientation is indicated with a rotation angle.

4. An apparatus comprising at least one processor and at least one memory, said at least one memory stored with code thereon, which when executed by said at least one processor, causes the apparatus to:

   - parse from a container file conforming to an ISO base media file format, a timed metadata track referring to an available media content of a media track of the container file, the available media content being 360-degree video;
   - parse, from the container file, at least one sample of the timed metadata track; and
   - parse from the at least one sample of the timed metadata track, a viewport, wherein the viewport is a part of the 360-degree video represented by the media track; and parse from the at least one sample of the timed metadata track, at least one value indicative of a quality of the viewport.

5. The apparatus according to claim 4, further being caused to parse, from the at least one sample of the timed metadata track, a horizontal field of view of the viewport, a vertical field of view of the viewport, and a position of the viewport, wherein the position is indicated in the at least one sample with two angles on a spherical coordinate system indicating a center point of the viewport.

6. The apparatus according to claim 5, further being caused to parse, from the at least one sample of the timed metadata track, an orientation of the viewport, wherein the orientation is indicated in the at least one sample with a rotation angle.

7. The apparatus according to any of claims 4 to 6, wherein the apparatus is further configured to:

   - determine that the viewport is suitable for displaying; and

   selecting the media track among tracks of the container file based on the at least one value indicative fo the quality of the viewport.

8. A method comprising:

   - including, in a container file conforming to an ISO base media file format, a timed metadata track referring to an available media content of a media track of the container file, the available media content being 360-degree video;
   - including, in the container file, at least one sample of the timed metadata track;
   - indicating, in the at least one sample of the timed metadata track, a viewport, wherein the viewport is a part of the 360-degree video represented by the media track; and
   - including, in the at least one sample of the timed metadata track, at least one value indicative of a quality of the viewport.

9. The method according to claim 8, further comprising indicating the viewport in the at least one sample of the timed metadata track with a horizontal field of view of the viewport, a vertical field of view of the viewport, and a position of the viewport, wherein the position is indicated with two angles on a spherical coordinate system indicating a center point of the viewport.

10. A method, comprising:

    - parsing, from a container file conforming to an ISO base media file format, a timed metadata track referring to an available media content of a media track of the container file, the available media content being 360-degree video;
    - parsing, from the container file, at least one sample of the timed metadata track; and
    - parsing, from the at least one sample of the timed metadata track, a viewport, wherein the viewport is a part of the 360-degree video represented by the media track; and
    - parsing from the at least one sample of the timed metadata track, at least one value indicative of quality of the viewport.

11. A computer readable storage medium stored with code thereon for use by an apparatus, which when executed by a processor, causes the apparatus to:

    - include in a container file conforming to an ISO base media file format, a timed metadata track referring to an available media content of a media track of the container file, the available media content being 360-degree video;
    - include, in the container file, at least one sample of the timed metadata track; and
    - indicate in the at least one sample of the timed metadata track, a viewport, wherein the viewport is a part of the 360-degree video represented by the media track; and
    - include in the at least one sample of the timed metadata track, at least one value indicative of a quality of the viewport.

12. A computer readable storage medium stored with code thereon for use by an apparatus, which when executed by a processor, causes the apparatus to

    - parse from a container file conforming to an ISO base media file format, a timed metadata track referring to an available media content of a media track of the container file, the available media content being 360-degree video;
    - parse, from the container file, at least one sample of the timed metadata track; and
    - parse, from the at least one sample of the timed metadata track, a viewport, wherein the viewport is a part of the 360-degree video represented by the media track; and
    - parse from the at least one sample of the timed metadata track, at least one value indicative of a quality of the viewport.

**Patentansprüche**

1. Vorrichtung, die mindestens einen Prozessor und mindestens einen Speicher umfasst, wobei in dem mindestens einen Speicher Code gespeichert ist, der, wenn er von dem mindestens einen Prozessor ausgeführt wird, die Vorrichtung zu Folgendem veranlasst:

   - Einbinden einer zeitgesteuerten Metadatenspur, die einen verfügbaren Medieninhalt betrifft, bei dem es sich um ein 360-Grad-Video handelt, in eine Containerdatei, die mit einem ISO-Basismediendateiformat konform ist;
   - Einbinden von mindestens einer Probe der zeitgesteuerten Metadatenspur in die Containerdatei und
   - Einbinden eines Darstellungsfeldes in die mindestens eine Probe der zeitgesteuerten Metadatenspur, wobei das Darstellungsfeld ein Teil des 360-Grad-Videos ist, der durch die Medienspur repräsentiert wird; und
   - Anzeigen von mindestens einem Wert, der eine Qualität des Darstellungsfeldes anzeigt, in der mindestens einen Probe der zeitgesteuerten Metadatenspur.

2. Vorrichtung nach Anspruch 1, wobei das Darstellungsfeld in der mindestens einen Probe der zeitgesteuerten Metadatenspur mit einem horizontalen Sichtfeld des Darstellungsfeldes, einem vertikalen Sichtfeld des Darstellungsfeldes und einer Position des Darstellungsfeldes angezeigt wird, wobei die Position mit zwei Winkeln auf einem sphärischen Koordinatensystem angezeigt wird, das einen Mittelpunkt des Darstellungsfeldes anzeigt.

3. Vorrichtung nach Anspruch 2, wobei das Darstellungsfeld in der mindestens einen Probe der zeitgesteuerten Metadatenspur zusätzlich mit einer Ausrichtung des Darstellungsfeldes angezeigt wird, wobei die Ausrichtung mit einem Drehwinkel angezeigt wird.

4. Vorrichtung, die mindestens einen Prozessor und mindestens einen Speicher umfasst, wobei in dem mindestens einen Speicher Code gespeichert ist, der, wenn er von dem mindestens einen Prozessor ausgeführt wird, die Vorrichtung zu Folgendem veranlasst:

   - Parsen einer zeitgesteuerten Metadatenspur, die einen verfügbaren Medieninhalt einer Medienspur der Containerdatei betrifft, aus einer Containerdatei, die mit einem ISO-Basismediendateiformat konform ist, wobei der verfügbare Medieninhalt ein 360-Grad-Video ist;
   - Parsen von mindestens einer Probe der zeitgesteuerten Metadatenspur aus der Containerdatei; und
   - Parsen eines Darstellungsfeldes aus der mindestens einen Probe der zeitgesteuerten Metadatenspur, wobei das Darstellungsfeld ein Teil des 360-Grad-Videos ist, der durch die Medienspur repräsentiert wird; und Parsen von mindestens einem Wert, der eine Qualität des Darstellungsfeldes anzeigt, aus der mindestens einen Probe der zeitgesteuerten Metadatenspur.

5. Vorrichtung nach Anspruch 4, die ferner veranlasst wird, ein horizontales Sichtfeld des Darstellungsfeldes, ein vertikales Sichtfeld des Darstellungsfeldes und eine Position des Darstellungsfeldes aus der mindestens einen Probe der zeitgesteuerten Metadatenspur zu parsen, wobei die Position in der mindestens einen Probe mit zwei Winkeln auf einem sphärischen Koordinatensystem angezeigt wird, das einen Mittelpunkt des Darstellungsfeldes anzeigt.

6. Vorrichtung nach Anspruch 5, die ferner veranlasst wird, eine Ausrichtung des Darstellungsfeldes aus der mindestens einen Probe der zeitgesteuerten Metadatenspur zu parsen, wobei die Ausrichtung in der mindestens einen Probe mit einem Drehwinkel angezeigt wird.

7. Vorrichtung nach einem der Ansprüche 4 bis 6, wobei die Vorrichtung ferner zu Folgendem ausgelegt ist:

   - Bestimmen, dass das Darstellungsfeld zum Anzeigen geeignet ist; und

   Auswählen der Medienspur aus Spuren der Containerdatei auf Basis des mindestens einen Wertes, der die Qualität des Darstellungsfeldes anzeigt.

8. Verfahren, das Folgendes umfasst:

- Einbinden einer zeitgesteuerten Metadatenspur, die einen verfügbaren Medieninhalt einer Medienspur der Containerdatei betrifft, in eine Containerdatei, die mit einem ISO-Basismediendateiformat konform ist, wobei der verfügbare Medieninhalt ein 360-Grad-Video ist;
- Einbinden von mindestens einer Probe der zeitgesteuerten Metadatenspur in die Containerdatei;
- Anzeigen eines Darstellungsfeldes in der mindestens einen Probe der zeitgesteuerten Metadatenspur, wobei das Darstellungsfeld ein Teil des 360-Grad-Videos ist, der durch die Medienspur repräsentiert wird; und
- Einbinden von mindestens einem Wert, der eine Qualität des Darstellungsfeldes anzeigt, in die mindestens eine Probe der zeitgesteuerten Metadatenspur.

9.  Verfahren nach Anspruch 8, das ferner das Anzeigen des Darstellungsfeldes in der mindestens einen Probe der zeitgesteuerten Metadatenspur mit einem horizontalen Sichtfeld des Darstellungsfeldes, einem vertikalen Sichtfeld des Darstellungsfeldes und einer Position des Darstellungsfeldes umfasst, wobei die Position mit zwei Winkeln auf einem sphärischen Koordinatensystem angezeigt wird, das einen Mittelpunkt des Darstellungsfeldes anzeigt.

10. Verfahren, das Folgendes umfasst:

- Parsen einer zeitgesteuerten Metadatenspur, die einen verfügbaren Medieninhalt einer Medienspur der Containerdatei betrifft, aus einer Containerdatei, die mit einem ISO-Basismediendateiformat konform ist, wobei der verfügbare Medieninhalt ein 360-Grad-Video ist;
- Parsen von mindestens einer Probe der zeitgesteuerten Metadatenspur aus der Containerdatei; und
- Parsen eines Darstellungsfeldes aus der mindestens einen Probe der zeitgesteuerten Metadatenspur, wobei das Darstellungsfeld ein Teil des 360-Grad-Videos ist, der durch die Medienspur repräsentiert wird; und
- Parsen von mindestens einem Wert, der eine Qualität des Darstellungsfeldes anzeigt, aus der mindestens einen Probe der zeitgesteuerten Metadatenspur.

11. Computerlesbares Speichermedium, auf dem ein Code zur Verwendung durch eine Vorrichtung gespeichert ist, der, wenn er von einem Prozessor ausgeführt wird, die Vorrichtung zu Folgendem veranlasst:

- Einbinden einer zeitgesteuerten Metadatenspur, die einen verfügbaren Medieninhalt einer Medienspur der Containerdatei betrifft, in eine Containerdatei, die mit einem ISO-Basismediendateiformat konform ist, wobei der verfügbare Medieninhalt ein 360-Grad-Video ist;
- Einbinden von mindestens einer Probe der zeitgesteuerten Metadatenspur in die Containerdatei; und
- Anzeigen eines Darstellungsfeldes in der mindestens einen Probe der zeitgesteuerten Metadatenspur, wobei das Darstellungsfeld ein Teil des 360-Grad-Videos ist, der durch die Medienspur repräsentiert wird; und
- Einbinden von mindestens einem Wert, der eine Qualität des Darstellungsfeldes anzeigt, in die mindestens eine Probe der zeitgesteuerten Metadatenspur.

12. Computerlesbares Speichermedium, auf dem ein Code zur Verwendung durch eine Vorrichtung gespeichert ist, der, wenn er von einem Prozessor ausgeführt wird, die Vorrichtung zu Folgendem veranlasst

- Parsen einer zeitgesteuerten Metadatenspur, die einen verfügbaren Medieninhalt einer Medienspur der Containerdatei betrifft, aus einer Containerdatei, die mit einem ISO-Basismediendateiformat konform ist, wobei der verfügbare Medieninhalt ein 360-Grad-Video ist;
- Parsen von mindestens einer Probe der zeitgesteuerten Metadatenspur aus der Containerdatei; und
- Parsen eines Darstellungsfeldes aus der mindestens einen Probe der zeitgesteuerten Metadatenspur, wobei das Darstellungsfeld ein Teil des 360-Grad-Videos ist, der durch die Medienspur repräsentiert wird; und
- Parsen von mindestens einem Wert, der eine Qualität des Darstellungsfeldes anzeigt, aus der mindestens einen Probe der zeitgesteuerten Metadatenspur.

**Revendications**

1.  Appareil comprenant au moins un processeur et au moins une mémoire, ladite au moins une mémoire stockant un code qui, lorsqu'il est exécuté par ledit au moins un processeur, amène l'appareil à :

- inclure, dans un fichier conteneur conforme à un format de fichier multimédia de base ISO, une piste de métadonnées temporisées faisant référence à un contenu multimédia disponible consistant en une vidéo à 360 degrés ;

- inclure, dans le fichier conteneur, au moins un échantillon de la piste métadonnées temporisées ; et
- inclure, dans l'au moins un échantillon de la piste métadonnées temporisées, une fenêtre de travail, dans lequel la fenêtre de travail est une partie de la vidéo à 360 degrés représentée par la piste multimédia ; et
- indiquer, dans l'au moins un échantillon de la piste métadonnées temporisées, au moins une valeur indicative d'une qualité de la fenêtre de travail.

2. Appareil selon la revendication 1, dans lequel la fenêtre de travail est indiquée dans l'au moins un échantillon de la piste métadonnées temporisées avec un champ de vision horizontal de la fenêtre de travail, un champ de vision horizontal vertical de la fenêtre de travail et une position de la fenêtre de travail, dans lequel la position est indiquée avec deux angles sur un système de coordonnées sphérique indiquant un point central de la fenêtre de travail.

3. Appareil selon la revendication 2, dans lequel la fenêtre de travail est également indiquée dans l'au moins un échantillon de la piste métadonnées temporisées avec une orientation de la fenêtre de travail, dans lequel l'orientation est indiquée avec un angle de rotation.

4. Appareil comprenant au moins un processeur et au moins une mémoire, ladite au moins une mémoire stockant un code qui, lorsqu'il est exécuté par ledit au moins un processeur, amène l'appareil à :

- analyser, à partir d'un fichier conteneur conforme à un format de fichier multimédia de base ISO, une piste de métadonnées temporisées faisant référence à un contenu multimédia disponible d'une piste multimédia du fichier conteneur, le contenu multimédia disponible consistant en une vidéo à 360 degrés ;
- analyser, à partir du fichier conteneur, au moins un échantillon de la piste métadonnées temporisées ; et
- analyser à partir de l'au moins un échantillon de la piste métadonnées temporisées, une fenêtre de travail, dans lequel la fenêtre de travail est une partie de la vidéo à 360 degrés représentée par la piste multimédia ; et
- analyser à partir de l'au moins un échantillon de la piste métadonnées temporisées, au moins une valeur indicative d'une qualité de la fenêtre de travail.

5. Appareil selon la revendication 4, étant en outre amené à analyser, à partir de l'au moins un échantillon de la piste métadonnées temporisées, un champ de vision horizontal de la fenêtre de travail, un champ de vision horizontal vertical de la fenêtre de travail et une position de la fenêtre de travail, dans lequel la position est indiquée dans l'au moins un échantillon avec deux angles sur un système de coordonnées sphérique indiquant un point central de la fenêtre de travail.

6. Appareil selon la revendication 5, étant en outre amené à analyser, à partir de l'au moins un échantillon de la piste métadonnées temporisées, une orientation de la fenêtre de travail, dans lequel l'orientation est indiquée dans l'au moins un échantillon avec un angle de rotation.

7. Appareil selon l'une des revendications 4 à 6, dans lequel l'appareil est en outre configuré pour :

- déterminer que la fenêtre de travail est adaptée à l'affichage ; et
- sélectionner la piste multimédia dans les pistes du fichier conteneur sur la base de l'au moins une valeur indicative de la qualité de la fenêtre de travail.

8. Procédé comprenant :

- l'inclusion, dans un fichier conteneur conforme à un format de fichier multimédia de base ISO, d'une piste de métadonnées temporisées faisant référence à un contenu multimédia disponible d'une piste multimédia du fichier conteneur, le contenu multimédia disponible consistant en une vidéo à 360 degrés ;
- l'inclusion, dans le fichier conteneur, d'au moins un échantillon de la piste métadonnées temporisées ;
- l'indication, dans l'au moins un échantillon de la piste métadonnées temporisées, d'une fenêtre de travail, dans lequel la fenêtre de travail est une partie de la vidéo à 360 degrés représentée par la piste multimédia ; et
- l'inclusion, dans l'au moins un échantillon de la piste métadonnées temporisées, d'au moins une valeur indicative d'une qualité de la fenêtre de travail.

9. Procédé selon la revendication 8, comprenant en outre l'indication de la fenêtre de travail dans l'au moins un échantillon de la piste métadonnées temporisées avec un champ de vision horizontal de la fenêtre de travail, un champ de vision horizontal vertical de la fenêtre de travail et une position de la fenêtre de travail, dans lequel la position est indiquée avec deux angles sur un système de coordonnées sphérique indiquant un point central de la fenêtre de travail.

10. Procédé, comprenant :

- l'analyse, à partir d'un fichier conteneur conforme à un format de fichier multimédia de base ISO, d'une piste de métadonnées temporisées faisant référence à un contenu multimédia disponible d'une piste multimédia du fichier conteneur, le contenu multimédia disponible consistant en une vidéo à 360 degrés ;
- l'analyse, à partir du fichier conteneur, d'au moins un échantillon de la piste métadonnées temporisées ; et
- l'analyse, à partir de l'au moins un échantillon de la piste métadonnées temporisées, d'une fenêtre de travail, dans lequel la fenêtre de travail est une partie de la vidéo à 360 degrés représentée par la piste multimédia ; et
- l'analyse à partir de l'au moins un échantillon de la piste métadonnées temporisées, d'au moins une valeur indicative de la qualité de la fenêtre de travail.

11. Support de stockage lisible par ordinateur stockant un code destiné à être utilisé par un appareil qui, lorsqu'il est exécuté par un processeur, amène l'appareil à :

- inclure dans un fichier conteneur conforme à un format de fichier multimédia de base ISO, une piste de métadonnées temporisées faisant référence à un contenu multimédia disponible d'une piste multimédia du fichier conteneur, le contenu multimédia disponible consistant en une vidéo à 360 degrés ;
- inclure, dans le fichier conteneur, au moins un échantillon de la piste métadonnées temporisées ; et
- indiquer dans l'au moins un échantillon de la piste métadonnées temporisées, une fenêtre de travail, dans lequel la fenêtre de travail est une partie de la vidéo à 360 degrés représentée par la piste multimédia ; et
- inclure dans l'au moins un échantillon de la piste métadonnées temporisées, au moins une valeur indicative d'une qualité de la fenêtre de travail.

12. Support de stockage lisible par ordinateur stockant un code destiné à être utilisé par un appareil qui, lorsqu'il est exécuté par un processeur, amène l'appareil à

- analyser, à partir d'un fichier conteneur conforme à un format de fichier multimédia de base ISO, une piste de métadonnées temporisées faisant référence à un contenu multimédia disponible d'une piste multimédia du fichier conteneur, le contenu multimédia disponible consistant en une vidéo à 360 degrés ;
- analyser, à partir du fichier conteneur, au moins un échantillon de la piste métadonnées temporisées ; et
- analyser, à partir de l'au moins un échantillon de la piste métadonnées temporisées, une fenêtre de travail, dans lequel la fenêtre de travail est une partie de la vidéo à 360 degrés représentée par la piste multimédia ; et
- analyser, à partir de l'au moins un échantillon de la piste métadonnées temporisées, au moins une valeur indicative d'une qualité de la fenêtre de travail.

Fig. 1

Fig. 2

Fig. 3

Fig. 4

Fig. 5

Fig. 6

Fig. 7

Fig. 8

910 — Including in a manifest infomration of an available media content

920 — Indicating in the manifest one of the following: a viewport or a spatial region

Indicating in the manifest at least one value indicative of a respective quality of the viewport or the spatial region

930

Fig. 9

EP 3 466 079 B1

1010

Parsing from a manifest information of an available media content

1020

Parsing from the manifest one of the following: a viewport or a spatial region

1030

Parsing from the manifest at least one value indicative of the respective quality of the viewport or the spatial region

1040

Determining that the viewport or the spatial region is suitable for displaying

Selecting from the manifest a reprsentation based on the at least one value indicative of the respective quality of the viewport or the spatial region

1050

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015197815 A
- EP 2824885 A

- US 2013188922 A

**Non-patent literature cited in the description**

- **LUCIA D'ACUNTO et al.** Using MPEG DASH SRD for zoomable and navigable video. *Proceedings of the 7th International Conference on Multimedia systems,* 01 January 2016

- Transparent end-to-end packet-switched streaming service (PSS); protocols and codecs. *3GPP TS 26.234 Release 9*
- Dynamic adaptive streaming over HTTP (DASH)-Part 1: Media presentation description and segment formats. ISO/IEC 23009-1. 2014